# EUROPEAN PATENT APPLICATION

(11) **EP 4 786 534 A1**
(43) Date of publication of application: **05.08.2026**
(21) Application number: 25155403.6
(22) Date of filing: 31.01.2025
(51) Int. Cl.: C08J 11/04, C08G 64/00

(54) **METHODS OF RECYCLING POLYCARBONATES**

(71) Applicant: Trinseo Europe GmbH, 8808 Pfäffikon (CH)
(72) Inventor: BALAN, Abidin, 4814VL Breda (NL); MERTENS, Chiel, 9000 Gent (BE); LAKEMAN, Pascal E.R.E.J., 4836AL Breda (NL)
(74) Representative: Casalonga

(57) **Abstract**

A method includes contacting an aqueous solution comprising one or more alkali hydroxides and water, one or more chloro carbonyl compounds or a precursor thereof, and a recovery solution comprising one or more waste polycarbonates and one or more polycarbonate solvents configured to dissolve the one or more waste polycarbonates and/or the one or more chloro carbonyl compounds to form one or more adjusted polycarbonates. A composition includes a polycarbonate polymer comprising residues of waste polycarbonate incorporated within the backbone and having branching.

## Description

### FIELD

Disclosed are methods of recycling polycarbonates from waste feedstocks and repairing the polycarbonates such that the repaired polycarbonates have sufficient quality useable in certain applications.

### BACKGROUND

Polycarbonate and copolymers containing carbonate units are utilized in a variety of molded structures. Polycarbonates and copolymers containing carbonate units form molded structures that are rigid. The molded structures may be used for a variety of uses, including cases for electronics, automobile parts, medical devices, home appliances, loud-speakers, home furnishings and the like. After extended use, these products are disposed of due to being damaged or replaced by newer products. In some instances, the polycarbonate used with these products has degraded such that it is no longer re-useable in new products with the same quality as virgin polycarbonate. Techniques have been used to recovery these polycarbonates from waste feedstocks, but additional steps are needed to workup the polycarbonates after the recover steps.

Accordingly, what is needed are techniques to recover and improve waste polycarbonate in a state that it is useable in new products and with a similar to or better than quality than virgin polycarbonate.

### SUMMARY

The disclosure provides a method that includes contacting an aqueous solution comprising one or more alkali hydroxides and water, one or more chloro carbonyl compounds or a precursor thereof, and a recovery solution comprising one or more waste polycarbonates and one or more polycarbonate solvents configured to dissolve the one or more waste polycarbonates and/or the one or more chloro carbonyl compounds to form one or more adjusted polycarbonates.

In some examples, the one or more waste polycarbonates may include free hydroxyl and/or carboxyl groups along the backbone. The one or more adjusted polycarbonates may include branching along the backbone from residues of the free hydroxyl and/or carboxyl groups along the backbone of the waste polycarbonate. The one or more adjusted polycarbonates may exhibit a polymodal molecular weight distribution. The adjusted polycarbonate may have a z-average molecular weight of about 40,000 g/mol or more. The one or more adjusted polycarbonates may have a waste polycarbonate content of 10 percent or more. The aqueous solution may further include one or more hydroxyl or carboxyl containing compounds that are not recycled. The waste polycarbonate may include one or more hydroxyl and/or carboxyl compounds, one or more polycarbonate polymers or oligomers having free carboxyl and/or hydroxyl groups, or any combination thereof. The method may further include contacting the one or more polycarbonate solvents and a waste feed comprising the one or more waste polycarbonates in a solid state to form the recovery solution. The method may further include separating the aqueous solution, the one or more polycarbonate solvents, and the one or more adjusted polycarbonate polymers to yield the one or more adjusted polycarbonate polymers in a solid state. The recovery solution and the one or more chloro carbonyl compounds in combination may form an organic solution that is essentially immiscible with the aqueous solution. The method may further include during contacting of one or more of the aqueous solution, the one of more chloro carbonyl compounds, and/or the recovery solution, applying agitation to the organic and aqueous solutions to form a single mixture. The method may further include maintaining a pH of about 11 to about 13 by addition of a pH solution of the alkali hydroxide during formation of the one of more adjusted polycarbonates. The method may further include before contacting the recovery solution, the aqueous solution, and the one or more chloro carbonyl compound, removing compounds in a solid state in the recover solution of a size of 10 mm or less. The method may further include before contacting the recovery solution, the aqueous solution, and the one or more chloro carbonyl compound, contacting the recovery solution with one or more precursor functional compounds configured to chain terminate, chain extend, and/or branch the one or more waste polycarbonates such that number and/or weight average molecular weight and/or flame retardancy is increased in the one or more waste polycarbonates. The method may further include before contacting the recovery solution, the aqueous solution, and the one or more chloro carbonyl compound, removing one or more hydroxyl and/or carboxyl containing compounds from the recovery solution such that content of free hydroxyl and/or carboxyl groups is reduced in the recovery solution. The one or more hydroxyl and/or carboxyl containing compounds may have free hydroxyl and/or carboxyl groups and a molecular weight of 1000 g/mol or less. The one or more hydroxyl and/or carboxyl containing compounds may include one or more bisphenol compounds. The method may include before contacting the recovery solution, the aqueous solution, and the one or more chloro carbonyl compound, hydroxylating the one or more waste polycarbonates to increase the free hydroxyl and/or carboxyl groups at the end or on the chain of the one or more waste polycarbonates. The step of hydroxylating the one or more waste polycarbonates may include oxidating the one or more waste polycarbonates to increase the free hydroxyl and/or carboxyl groups of the one or more waste polycarbonates; exposing the one or more waste polycarbonates to ultraviolet light to increase the free hydroxyl and/or carboxyl groups of the one or more waste polycarbonates, or conducting hydrolysis on the one or more waste polycarbonates to increase the free hydroxyl and/or carboxyl groups of the one or more waste polycarbonates. The method may further include before contacting the recovery solution, the aqueous solution, and the one or more chloro carbonyl compound, contacting the one or more chloro carbonyl compound and the polycarbonate solvent with the aqueous solution to form virgin polycarbonates; and sequentially or simultaneously: contacting the recovery solution with the one or more chloro carbonyl compound to form the organic solution; and contacting the organic solution and the virgin polycarbonate to form the one or more adjusted polycarbonates. The one or more adjusted polycarbonates may have a weight or number average molecular weight that is greater than the one or more waste polycarbonates.

The disclosure provides a composition that includes a polycarbonate polymer comprising residues of one or more waste polycarbonates incorporated within a backbone of the polycarbonate polymer and having branching.

In some examples, the polycarbonate polymer may have a ratio of z-average molecular weight/weight average molecular weight of about 1.8 or more. The polycarbonate polymer may have an M_{z+1} of 80,000 or more. The polycarbonate polymer may exhibit a polymodal molecular weight distribution. The polycarbonate polymer may have a z-average molecular weight of 70,000 g/mol or more. The polycarbonate polymer may have a weight average molecular weight of 40,000 g/mol or more. The polycarbonate polymer may have a number average molecular weight of 10,000 g/mol or more. The composition may have a free hydroxyl and/or carboxyl content of the polymer of about 1000 ppm or less, based on the total weight of the composition. The polycarbonate polymer may have free hydroxyl and/or carboxyl group present in an amount of 800 ppm or less, based on the total weight of the polycarbonate polymer. The composition may further include one or more hydroxyl and/or carboxyl compound present in an amount of about 200 ppm or less, based on the total weight of the composition. The polycarbonate polymer may further include residues of the one or more functional compounds pendant from or incorporated within the backbone. The polycarbonate polymer may have a polydispersity index of 3.5 or less. The polycarbonate polymer may include the residues of waste polycarbonate in weight percent at least 10 percent, based on the total weight of the polycarbonate polymer. The polycarbonate polymer may further include residues of virgin polycarbonate in weight percent at least 10 percent, based on the total weight of the polycarbonate polymer. The branching may occur along the backbone of the polycarbonate polymer without residues of one or more functional compounds.

The present disclosure provides for advantageous techniques to reuse degraded polycarbonates with minimal or no additional virgin monomers to yields adjusted polycarbonates that are repaired and have number and/or weight average molecular weights that are sufficient in new commercial uses. The present techniques are advantageous in that the waste polycarbonate can be dissolved into an appropriate polycarbonate solvent, form a recovery solution, and be directly moved into an interfacial polymerization process for formation of adjusted polycarbonates. The recovery solution can optionally include recycled or virgin hydroxyl and/or carboxyl containing compounds, such as bisphenol compounds or derivatives thereof, that are useable in the interfacial polymerizations process, even though normally these compounds are added in an initial aqueous solution of the interfacial polymerization process. Since the hydroxyl and/or carboxyl containing compounds and/or the waste polycarbonate generally have one or many free hydroxyl and/or carboxyl groups from general degradation in prior use, precursor steps (i.e., before interfacial polymerization) and/or at the interfacial polymerization steps can be used to introduce desirable branching and/or molecular weight increases on the adjusted polycarbonates, relative to the recycled polycarbonates incorporated therein.

### BRIEF DESCRIPTION OF THE DRAWING

FIG. 1 illustrates a method of recovering a waste polycarbonate and forming an adjusted polycarbonate.
FIG. 2 illustrates size exclusion chromatography of different polycarbonate products.
FIG. 3 illustrates complex velocity testing for recycled, virgin, and hybrid polycarbonates.

### DETAILED DESCRIPTION

While the disclosure has been described in connection with certain embodiments, it is to be understood that the disclosure is not to be limited to the disclosed embodiments and is intended to cover various modifications and equivalent arrangements included within the scope of the appended claims, which scope is to be accorded the broadest interpretation to encompass all such modifications and equivalent structures as is permitted under the law.

In the present disclosure, the term repaired refers to adjusting the molecular weight of the waste polycarbonate to an adjusted polycarbonate with a different molecular weight, branching structure, or with a reduced number of hydroxyl and/or carboxyl groups. A recovery solution includes at least polycarbonate solvent and at least one polycarbonate compound. Waste polycarbonate refers to polycarbonate located in waste feedstocks. Adjusted polycarbonate refers to polycarbonate recovered from waste feedstocks and contacted with one or more functional compounds and/or chloro carbonyl compounds as described herein. Virgin polycarbonate refers to polycarbonate made by one or more techniques that react one or more virgin monomers, such as diols and carbonic acids, to form the virgin polycarbonate. Functional compounds as used herein end-cap, chain extend, or branch one or more polycarbonate chains with or without binding to the one or more linking compounds and/or flame retardancy modifiers. Linking compound as used herein end cap, chain extend, and/or branch the polycarbonate chains in combination with the flame retardancy modifier or another functional compound.

Waste feedstocks include at least some waste polycarbonate. Waste feedstocks include waste polycarbonate and at least one other waste non-polycarbonate compound, such as a metal compound. Waste feedstocks contain from about 10 weight percent to less than 100 weight percent waste polycarbonate. Non-polycarbonate compounds include one or more of metals, non-polycarbonate polymers, battery electrolytes, small organic compounds, oligomeric compounds, or any combination thereof. Non-polycarbonate compounds may include one or more compounds commonly mixed or blended with polycarbonate, including non-polycarbonate containing polymers, (such as styrenics, polystyrene, styrene acrylonitrile, acrylonitrile butadiene, butadiene elastomers, high impact polystyrene, polymethylmethacrylate), flame retardants, UV stabilizers, fillers, antioxidants, other additives, other polymers, or any other non-polycarbonate compound. Examples of waste feedstocks may include any non-polycarbonate compound in any waste containing polycarbonates, such as cases for electronics, plastic waste, toys, packages, conveyors, trays, automobile parts, medical devices, home appliances, loud-speakers, home furnishings, any other recycled articles including non-polycarbonate polymers, metals, printed circuit boards, batteries, magnets, or any combination thereof. A portion of the non-polycarbonate compounds in the waste feedstock may be removed through one or more pretreatment steps before contacting the waste feedstock and a polycarbonate solvent so some of the non-polycarbonate compounds are not undesirably dissolved in the polycarbonate solvent.

The present disclosure includes contacting a waste feedstock containing a waste polycarbonate and one or more polycarbonate solvents configured to dissolve the waste polycarbonate to form a recovery solution. Before subjecting the waste polycarbonate to a polymerization step, the waste polycarbonate can be separated from undesirable non-polycarbonate compounds in the recovery solution and further modified, such as by using one or more functional compounds that are configured to chain extend, branch, or end cap portions along the backbone or ends of the waste polycarbonate. The waste polycarbonate generally has a relatively high content of free hydroxyl and/or carboxyl groups from general use and degradation. This is useful to prepare the waste polycarbonate before introduction into the polymerization step and the free hydroxyl and/or carboxyl groups can be increased through steps of hydroxylating the polycarbonate before or after the polymerization step. After addition of an aqueous solution (which may optionally include one or more hydroxyl and/or carboxyl containing compounds, polymerization catalysts, and/or functional compounds) and one or more chloro carbonyl compounds to the recovery solution, a mixture is formed that can combine waste polycarbonate, waste or virign hydroxyl and/or carboxyl containing compounds (e.g., bisphenol compounds and derivatives thereof), and virgin polycarbonate polymers and/or oligomers into adjusted polycarbonates that have desirable molecular weights, branching, and/or that have reduced hydroxyl content. Because of the presence of many free hydroxyl and/or carboxyl groups, the mixture provides a medium to combine reactive functional groups between hydroxyl and/or carboxyl containing compounds, virgin polycarbonate oligomers and polymers formed in situ, waste polycarbonate having free hydroxyl and/or carboxyl groups, and functional compounds included that improve chain extension, end capping, and branching. With these techniques, incorporation of the waste polycarbonates, which may otherwise not be commercial useable, into the adjusted polycarbonates results in polycarbonates that have improved or repaired molecular weights, reduced phenolic and/or hydroxyl content, desirable branching, and are ready for consumer use again.

One or more as used herein means that at least one, or more than one, of the recited components may be used as disclosed. Residual content, or residue, of a component is the amount of the component present in free form or reacted with another material, such as a polymer. The residual content of a component is calculated from the ingredients utilized to prepare the component or composition. It can be determined utilizing known analytical techniques. Hydrocarbyl as used herein refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified. Tg is the temperature or temperature range at which a polymeric material shows an abrupt change in its physical properties, including, for example, mechanical strength. Tg can be determined by differential scanning calorimetry (DSC). Post-industrial as used herein refers to a source of a material that originates during the manufacture of a good or product. Post-consumer as used herein refers to a source of material that originates after the end consumer has used the material in a consumer good or product.

Hydroxyl and/or carboxyl containing compounds as used herein means a compound including at least one hydroxyl or carboxyl group bound to a carbon atom and having a molecular weight of about 500 g/mol or less, about 1000 g/mol or less, about 2000 g/mol or less, or about 3000 g/mol or less. The hydroxyl and/or carboxyl containing compound may be a residue of polycarbonate and have a molecular weight as described herein. Polycarbonate oligomers, as described herein, may be distinguished from hydroxyl and/or carboxyl containing compounds by having a number or weight average molecular weight of 1000 g/mol or more, 3000 g/mol or more, or 5000 g/mol or more. The hydroxyl and/or carboxyl containing compound may include more than one repeating unit or derivative thereof that is a residue of polycarbonate. A repeating unit of the hydroxyl and/or carboxyl containing compound may be those repeating units described in relation to polycarbonates discussed herein that is terminated by at least one hydroxyl or carboxyl group. The hydroxyl and/or carboxyl containing compound may include one or more bisphenol-A, bisphenol-S, bisphenol-F, bisphenol-E, bisphenol Z, tert-butyl phenol, or derivatives and/or combinations thereof. The hydroxyl and/or carboxyl containing compound may be separated from the recovery solution by any technique described herein such as by contacting a solvent with the recovery solution to extract the hydroxyl and/or carboxyl containing compound, using an absorbent or adsorbent to remove the hydroxyl and/or carboxyl containing compound, an additive that precipitates the hydroxyl and/or carboxyl containing compound, applying a charge to the compound to remove the hydroxyl and/or carboxyl containing compound, filtering the hydroxyl and/or carboxyl containing compound, or any other separation technique described herein. After one or more separation steps of the recovery solution to remove the hydroxyl and/or carboxyl containing compounds, the polycarbonate solution may be essentially free of hydroxyl and/or carboxyl containing compounds or groups (which may in combination be referred to as free hydroxyl and/or carboxyl content). Hydroxyl and/or carboxyl groups may be present on the waste polycarbonate polymers or oligomers at the ends or pendant from the backbone due to degradation of the polycarbonate or from unreacted hydroxyl and/or carboxyl groups leftover from a polymerization step. Essentially free of hydroxyl and/or carboxyl containing compounds or groups may be about 1000 ppm or less, about 500 ppm or less, about 200 ppm or less, about 100 ppm or less, or about 50 ppm or less. Essentially free of hydroxyl and/or carboxyl containing compounds or groups may be about 25 ppm or less, 10 ppm or less, or an amount that is not detectable using conventionally known methods. Hydroxyl and/or carboxyl containing compounds may be reduced in the recovery solutions and/or polymeric compositions described herein by a weight percent using functional compounds, linking compounds, flame retardancy modifiers, and/or separation techniques to remove hydroxyl and/or carboxyl groups. Hydroxyl and/or carboxyl containing compounds may be reduced by about 10 percent or more, about 30 percent or more, or about 50 percent or more. Hydroxyl and/or carboxyl containing compounds may be reduced by about 70 percent or more, about 90 percent or more, or about 95 percent or more. Hydroxyl and/or carboxyl containing compounds may be determined by any technique known to the skilled artisan. As an example, free phenolic species (including bisphenol compounds and derivatives described herein) may be detected using a HPLC equipped with a standard C18 column and fluorescence detector with excitation wavelength of 310 nm and emission monitoring at 275 nm. Quantification may be completed by making use of external standards of BPA and phenol. The sample preparation may include dissolving 1 g of the PC sample in 5 mL dichloromethane, followed by the addition of 20 mL acetonitrile under continuous shaking. 2 mL of the supernatant that is filtered over a 0.45 µm syringe filter before it is analyzed using HPLC.

Polycarbonate as used herein means a polymer containing carbonate units. Such polymers may be homopolymers consisting essentially of carbonate monomer units or copolymers containing one or more other monomer units (co-monomer units; e.g., ester containing blocks) and carbonate units (e.g., polycarbonate polyesters). Such copolymers may be block copolymers containing two or more blocks of different monomer units or may be random copolymers with the different monomer units randomly located along the polymer backbone. The other monomer units may comprise any monomer units that do not negatively impact the inherent properties of polycarbonates, for instance heat resistance, impact resistance, moldability, flexural modulus, bending strength, haze and transparency, where required for the intended use. Among exemplary comonomer units are ester units, polysiloxane units, and the like. The amount of carbonate monomer units in copolycarbonates is selected such that the resulting polymer retains the desirable properties of polycarbonates, as disclosed herein. The copolycarbonates may contain greater than 50 mole percent carbonate monomer units, about 75 mole percent or greater carbonate monomer units, about 80 mole percent or greater carbonate monomer units or about 85 mole percent or greater carbonate monomer units. The copolycarbonates may contain about 99 mole percent or less carbonate monomer units, about 97 mole percent or less carbonate monomer units or about 95 mole percent or less carbonate monomer units. The copolycarbonates may contain about 1 mole percent or greater co-monomer monomer units, about 3 mole percent or greater co-monomer monomer units or about 5 mole percent or greater co-monomer monomer units. The copolycarbonates may contain less than 50 mole percent co-monomer monomer units, about 25 mole percent or less co-monomer monomer units, about 20 mole percent or less co-monomer monomer units or about 15 mole percent or less co-monomer monomer units. The polycarbonate units may contain aromatic units in the backbone of the polymer.

The production of polycarbonates is affected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols. Diphenols useful to produce the aromatic polycarbonates and/or aromatic polyester carbonates may correspond to formula I: 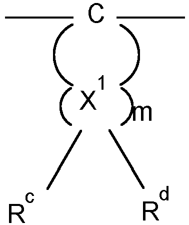 wherein A denotes a single bond, a C ₁₋₅ alkylene, a C ₂₋₅ alkylidene, a C ₅₋₆ cycloalkylidene, -O-, -SO-, -CO-, -S-, -SO₂-, or a C ₆₋₁₂ arylene, on to which other aromatic rings, which optionally contain hetero atoms, can be condensed, or a radical of formula II or III: II 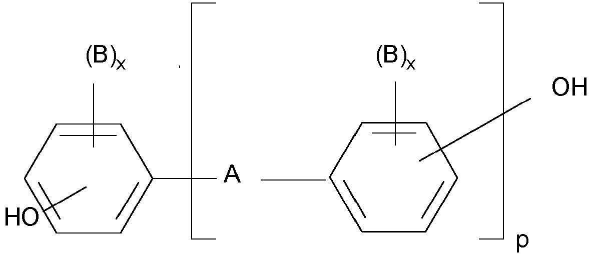 or III 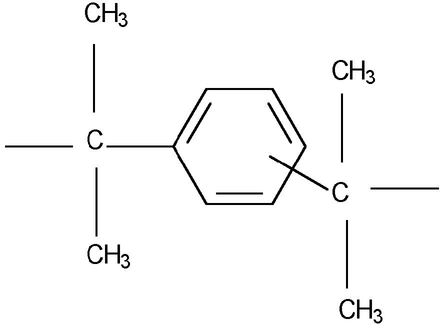
wherein B in each case is independently hydrogen, a C ₁₋₁₂ alkyl, preferably methyl, or a halogen, preferably chlorine and/or bromine;
x in each case is mutually independently 0, 1, or 2;
p is 0 or 1;
R^{c} and R^{d} are mutually independent of each other and are individually selectable for each X¹ and are hydrogen or a C ₁₋₆ alkyl, preferably hydrogen, methyl or ethyl;
X¹ denotes carbon; and
m denotes an integer from 4 to 7, preferably 4 or 5, with the proviso that R^{c} and R^{d} simultaneously denote an alkyl on at least one X¹ atom.

Exemplary diphenols are hydroquinone, resorcinol, dihydroxybiphenyls, bis (hydroxyphenyl)-C ₁₋₅ alkanes, bis(hydroxyphenyl)-C ₅₋₆ cycloalkanes, bis(hydroxyl-phenyl) ethers, bis(hydroxyphenyl)sulfoxides, bis(hydroxyphenyl)ketones, bis(hydroxyl-phenyl) sulfones and 4,4"-bis(hydroxyphenyl)diisopropylbenzenes, as well as derivatives thereof which have brominated and/or chlorinated nuclei. Diphenols which are particularly preferred are 4,4'-dihydroxybiphenyl, bisphenol A, 2,4-bis(4-hydroxyphenyl)-2-methyl-butane, 1,1-bis (4-hydroxyphenyl)-cyclohexane, 1,1-bis(4-hydroxyphenyl)-3,3,5-trimethyl-cyclohexane, 4,4-dihydroxydiphenyl sulfide and 4,4-dihydroxydiphenyl sulfone, as well as di- and tetra-brominated or chlorinated derivatives thereof, such as 2,2-bis(3-chloro-4-hydroxy-phenyl)propane, 2,2-bis-(3,5-dichloro-4-hydroxyphenyl)propane or 2,2-bis(3,5-dibromo-4-hydroxyphenyl)propane. 2, 2-bis-(4-hydroxyphenyl) propane (bisphenol A) is particularly preferred. The diphenols can be used individually or as arbitrary mixtures. The diphenols are known in the literature or can be obtained by methods known in the literature. Apart from bisphenol A homopolycarbonates, exemplary polycarbonates include copolycarbonates of bisphenol A with up to 15 mole percent, with respect to the molar sums of the diphenols, of other diphenols which are disclosed, such as 2,2-bis(3,5-dibromo-4-hydroxyphenyl)-propane.

To cap, branch, or chain extend the polycarbonates used in the present disclosure, one or more functional compounds or compounds are used. The function compounds may be configured to prepare a target molecular weight, target hydroxyl and/or carboxyl content on the backbone or ends, and/or change functional groups on the polycarbonate polymer. Precursor functional compounds or compounds may be used in a step before contact with the chloro carbonyl compounds or precursor thereof. Reactor functional groups or compounds may be used when the polycarbonates or monomers thereof are contacted with the chloro carbonyl compounds or precursors thereof. Precursor and/or reactor functional groups or compounds may include one or more chain extenders, chain terminators, branching agents, or a combination of both. The precursor and/or reactor functional compounds may be configured to bind with free hydroxyl and/or carboxyl groups that are along the backbone (i.e., pendant from the backbone) and/or on the ends of waste or virgin polycarbonate polymers. The precursor and/or reactor functional groups may end-cap, chain extend, or branch one or more polycarbonate chains without binding to or with the one or more linking compounds and/or flame retardancy modifiers. The one or more adjusted polycarbonates may have a flame resistance of V-1 or V-0 at a thickness of 1.6 mm or 1.0 mm, according to UL-94 vertical test. Linking groups, flame resistance, and/or flame retardancy modifiers are further described in PCT application No. PCT/EP2024/070396 filed on July 18, 2024, which is incorporated herein by reference in its entirety.

The precursor and/or reactor functional groups or compounds may be similar or different. Functional groups or compounds may be added to the recovery solution, the aqueous solution, or mixture thereof one at one time, individually over one or more periods of time, or in series to branch and/or chain extend and subsequently chain terminate and achieve desirable molecular weights and associated properties. The one or more functional compounds may be added to the recovery solution, the aqueous solution, or mixture thereof in an amount sufficient to reduce the amount of hydroxyl groups to the desired level, chain extend and/or branch the polycarbonates. The one or more functional compounds may be added to the recovery solution, the aqueous solution, or mixture thereof in an amount of about 0.01 weight percent or more, 0.1 weight percent or more, or about 0.5 weight percent or more, based on the total weight of the waste polycarbonate in the recovery solution. The one or more functional compounds may be added to the recovery solution, the aqueous solution, or mixture thereof in an amount of about 10 weight percent or less, 5 weight percent or less, or about 1 weight percent or less, based on the total weight of the waste polycarbonate in the recovery solution.

The chain terminator may impact molecular weight and/or be configured to react with at least one free hydroxyl and/or carboxyl group of one or more waste, virgin, and/or adjusted polycarbonates to chain terminate, c non-polycarbonate compounds to remove free hydroxyl and/or carboxyl groups, or both. The chain terminators described herein may be configured to bind with one or more hydroxyl or carboxyl groups in the recovery solution, the aqueous solution, or mixture thereof so that the free hydroxyl and/or carboxyl groups do not cleave one or more polycarbonate polymers. The chain terminators may include one or more groups that are reactable with the one or more hydroxyl or carboxyl groups in a condensation reaction. The chain terminators may be used to chain terminate the one or more waste and/or adjusted polycarbonates. The chain terminators may be used to bind with one or more non-polycarbonate compounds so that free hydroxyl and/or carboxyl groups are removed from the recovery solution and/or to prevent the polycarbonate chains from being cleaved by undesired interactions by the hydroxyl and/or carboxyl groups. The chain terminator may be any compound that reacts with the hydroxyl and or carboxyl groups which do not negatively impact the usefulness of the resulting polycarbonates. Exemplary chain terminators may include one or more isocyanates, amines, esters, epoxides, anhydrides, carboxylic acids, or any combination thereof.

Chain terminators may include one or more phenolic compounds. Phenolic compounds may include phenol, p-chlorophenol, p-tert-butylphenol, 4-(1 ,3-dimethyl-butyl)-phenol and 2,4,6-tribromophenol; long chain alkyl phenols, such as monoalkylphenols or dialkylphenols which contain a total of 8 to 20 carbon atoms in their alkyl substituents, exemplary are 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol.

Branching agents used in this disclosure may be any compound capable of separately reacting with three or more carboxyl and/or hydroxyl groups on the same or separate polycarbonate compounds. The branching agents may have a functionality of three or more, four or more, five or more, or six or more. The functionality is a measure of the ability to bind with individual hydroxyl and/or carboxyl groups. The branching agents may react with three or more, four or more, five or more, or a plurality of hydroxyl and/or carboxyl groups. The polycarbonates can be branched, for example by the incorporation of about 0.05 to about 2.0 mole percent, with respect to the sum of the branching agents used, of trifunctional compounds or of compounds with a functionality higher than three, for example those which contain three or more phenolic groups. Branched polycarbonates useful for the compositions disclosed can be prepared by known techniques, for example several methods are disclosed in USP 3,028,365; 4,529,791; and 4,677,162; which are hereby incorporated by reference in their entirety. Exemplary branching agents include tri- or multi-functional carboxylic acid chlorides, such as trimesic acid trichloride, cyanuric acid trichloride, 3,3'-,4,4'-benzophenone tetracarboxylic acid tetra chloride, 1,4,5,8-naphthalene-tetracarboxylic acid tetrachloride or pyromellitic acid tetra chloride, in amounts of about 0.01 to about 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris (4-hydroxy phenyl) heptane, 1,3,5-tris(4-hydroxyphenyl)-benzene, 1,1,1-tris(4-hydroxy phenyl)ethane, tris(4-hydroxyphenyl)-phenyl-methane, 2,2-bis[4,4-bis(4-hydroxyphenyl) cyclohexyl]propane, 2,4-bis[1-(4-hydroxyphenyl)-1-methyl-ethyl]phenol, tetrakis(4-hydroxy phenyl)-methane, 2,6-bis(2-hydroxy-5-methyl-benzyl)-4-methyl-phenol, 2-(4-hydroxyphenyl) -2-(2,4-dihydroxyphenyl)propane, or tetrakis(4-[1-(4-hydroxyphenyl)-1-methylethyl]-phen-oxy)-methane in amounts of about 0.01 to about 1.0 mole percent with respect to the diphenols used. Phenolic branching agents can be placed in the reaction vessel with the diphenols. Acid chloride branching agents can be introduced together with the acid chlorides.

The chain extenders may include any compound having sufficient functional groups to bind two separate polycarbonate chains together. The chain extenders may be configured to react with two separate carboxyl and/or hydroxyl groups so that polycarbonate is chain extend or to remove free carboxyl and/or hydroxyl groups in the recovery solution, the aqueous solution, or mixture thereof. The chain extenders may comprise at least two functional groups sufficient to separately react with two different polycarbonate chains and/or free hydroxyl and/or carboxyl groups. The chain extenders may be used to bind with one or more non-polycarbonate compounds so that free hydroxyl and/or carboxyl groups are removed from the recovery solution, the aqueous solution, or mixture thereof and/or to prevent the polycarbonate chains from being cleaved by undesired interactions by the hydroxyl and/or carboxyl groups. A combination of chain extenders may be used to bind polycarbonates having different end groups. Examples of chain extenders may include two or more functions groups including isocyanates, amines, esters, epoxides, anhydrides, carboxylic acids, or any combination thereof.

The present disclosure provides for a method of forming adjusted polycarbonates including contacting a chloro carbonyl or precursors thereof, an aqueous solution, and a recovery solution under such conditions effective to form the adjusted polycarbonates in an interfacial polymerization process. The aqueous solution may be essentially immiscible with any or all of the recovery solution or any component dissolved therein, the organic solution, the chloro carbonyl or precursors thereof, and/or the polycarbonate solvent. The combination of the aqueous solution and the organic and/or recovery solutions may be agitated such that a single mixture is formed. The mixture of the aqueous solution and the organic and/or recovery solutions may be any heterogenous or homogenous mixture of two or more essentially immiscible components, such as a suspension, dispersion, emulsion, colloid or any combination thereof.

Interfacial polymerization to form polycarbonates may occur in the mixture of the aqueous solution and the recovery and/or organic solutions (i.e., solutions containing the polycarbonate solvent). Interfacial polymerization techniques to form polycarbonates are further discussed in U.S. Patent Nos. 5,037,942 and 5,037,941, which are incorporated herein by reference in its entirety. Interfacial polymerization may occur at a pH level sufficient to allow for continued bonding of monomers, functional compounds, oligomer, and/or polymers that are integrated within the adjusted polycarbonates. The pH levels may be maintained by addition of an appropriate basic solutions (e.g., a caustic solution including the alkali hydroxide) before or during the reaction of the components in the mixture of the aqueous solution and the recovery and/or organic solutions. The pH level may be maintained at or above 7. The pH level may be maintained at 7 or more, 8 or more, 9 or more, 10 or more, 11 or more, 12 or more, or 13 or more. The pH level may be maintained at 14 or less, 13.5 or less, or 13 or less.

Before formation of the adjusted polycarbonates, a recovery solution may be formed by contacting a waste feedstock containing waste polycarbonate with one or more polycarbonate solvents. The polycarbonate solvent functions to dissolve solid polycarbonate from a waste feedstock and/or to facilitate interfacial polymerization when combined with the aqueous solution and/or chloro carbonyl compounds or precursors thereof. The polycarbonate solvent may dissolve one or more waste polycarbonates from the waste feedstock without dissolving one or more other non-polycarbonate polymers and other materials that negatively impact the use of the recovered polycarbonates present in the waste stream. Polycarbonate solvents may have a boiling point sufficient to be heated to a temperature that will not break the chains of the polycarbonate. The polycarbonate solvent may have a boiling point of about 25 °C or more, 40 about °C or more, or about 60 °C or more. The polycarbonate solvent may have a boiling point of about 160 °C or less, about 120 °C or less, or about 80 °C or less. The polycarbonate solvent may be any solvent that preferentially dissolves polycarbonates with respect to other polymers and materials present in the waste stream that could negatively impact the use of the recovered polymers. The polycarbonate solvent may be a polar aprotic solvent. The polycarbonate solvent may comprise at least one halogen atom. The polycarbonate solvent may be free of one or more reactable protons. The polycarbonate solvent may be free of one or more carboxyl and/or hydroxyl groups. The polycarbonate solvent may not be capable of reacting with one or more carboxyl and/or hydroxyl groups. The polycarbonate solvent may be immiscible with a polar protic solvent, such as water, so that the polycarbonate solvent can be used in a devolatilization process to recover the polycarbonate solvent. The polycarbonate solvent may comprise one or more of trichloromethane, dichloromethane, chlorobenzene, dichlorobenzene, tetrahydrofuran, 2-methyl tetrahydrofuran, N-methyl-2-pyrrolidone, dimethylformamide, 1,4-dioxane, methyl ethyl ketone, ethyl acetate:ethanol (3:1, binary solvent), dimethyl sulfoxide, or any combination thereof. Exemplary polycarbonate solvents may include trichloromethane and/or dichloromethane.

The polycarbonate solvent and the waste feedstock may be contacted using any technique or a combination of techniques such that the polycarbonate solvent dissolves a portion of the waste polycarbonate or becomes saturated with waste polycarbonate in the recovery solution. The waste feedstock may be moved into contact with polycarbonate solvent that is located in an appropriate reservoir. In some examples, the polycarbonate solvent may be contacted with the waste feedstock by applying a gaseous or liquid fluid stream to a waste feedstock and allowing the polycarbonate solvent to collect in an appropriate reservoir as the recovery solution. Techniques for recovering waste polycarbonate from waste feedstocks may be further described in PCT Application No. PCT/EP2024/070392 filed on July 18, 2024, which is incorporated herein by reference in its entirety.

The aqueous solution, the chloro carbonyl compound or precursors thereof, the polycarbonate solvent, the waste feedstock, the recovery solution, or any combination thereof may be contacted in any housing sufficient to contain fluids (e.g., liquids and/or gases). The polycarbonate solvent and the waste feedstock may be contacted in a sealed housing that is configured to contain fluids and gases so that the waste feedstock may be mixed with fluids and gases to achieve desirable dissolution levels of waste feedstock. The aqueous solution, the chloro carbonyl compound or precursors thereof, the polycarbonate solvent, the waste feedstock, the recovery solution, or any combination thereof may be moved into a sealed housing through an access point and moved into contact with polycarbonate solvent such that minimal or no polycarbonate solvent is lost through the access point as any one of the ingredients are moved into and out of the sealed housing. In some examples, the sealed housing includes an airlock chamber that is configured to receive the waste feedstock a first access point, seal the first access point, and open a second access point to move the waste feedstock into contact with the polycarbonate solvent. Additional access points may be included to remove treated waste feedstock, waste polycarbonate, recovery solution, functional compounds, virgin polycarbonate monomers, polymerization catalysts, hydroxyl and/or carboxyl containing compounds, scavengers or absorption materials, and/or to add virgin or recycled polycarbonate solvent.

The aqueous solution, the chloro carbonyl compound or precursors thereof, the polycarbonate solvent, the waste feedstock, the recovery solution, or any combination thereof may be contacted in a housing that is configured to apply heating and cooling in a series of sections within the housing so that the housing can apply liquid and gaseous polycarbonate solvent in different locations. The housing may include bottom and middle sections that can each optionally be heated and a top section that is optionally cooled, where the waste feedstock may be moved into the housing at any section, and as heat is applied in the middle or bottom sections to volatilize polycarbonate solvent, the top section cools solvent so that the solvent does not escape through a top of the housing.

Before, during, or after contacting the aqueous solution, the chloro carbonyl compound or precursors thereof, the polycarbonate solvent, the waste feedstock, the recovery solution, or any combination thereof, heat and/or agitation may be applied to the waste feedstock, recovery solution, polycarbonate solvent, or combination thereof to improve dissolution time of the waste polycarbonate into the polycarbonate solvent. The heat and/or agitation may be applied in combination, separately, or in series to achieve desired concentration levels, saturation, and/or dissolution times of the waste polycarbonate in the polycarbonate solvent. The heat and/or agitation may separately or in combination provide techniques to control the physical state (e.g., gas, liquid, solid) of the polycarbonate solvent and/or waste polycarbonate.

The housing may be equipped with any instrument sufficient to apply heating and/or cooling to control the physical state of the polycarbonate solvent, improve dissolution of the waste polycarbonate in the polycarbonate solvent, or control polymerization or separation in the mixture of the recovery solution and the aqueous solution. Instruments that apply heating and/or cooling though any means sufficient to adjust the temperature of the solvents or mixtures may be useable. The housing may be equipped with one or more, two or more, three or more, or a plurality of heating and/or cooling instruments to manipulate the temperatures of the polycarbonate solvent. The instruments for heating and cooling may be in the same section or may be positioned in separate locations and/or sections so that the state of the polycarbonate solvent is controlled and/or the polycarbonate solvent is prevented from escaping the housing. Agitation may be applied to polycarbonate solvent in a liquid state and separately in a gaseous state. Any type of agitation may be supplied which enhances the dissolution of polycarbonate into the polycarbonate solvent or maintain a homogenous or heterogenous mixture (e.g., a dispersion) of the aqueous solution and the recovery solution. In some examples, the housing may be equipped with multiple instruments configured to apply agitation in a single state. The housing may be equipped with a sonication device (i.e., for applying ultrasonic waves) and a stirring device so that two or more techniques can be used to improve agitation and, subsequently, dissolution of the waste polycarbonate into the polycarbonate solvent is improved. Examples of agitators may include sonicators, impellers, magnetic stirrers, vortexers, rockers, shakers, or any combination thereof.

The agitation may function to move dissolved waste polycarbonate molecules and other reaction components (e.g., chloro carbonyl compounds, functional compounds, hydroxyl containing compounds) into contact with each other such that desirable reactions occur in the mixture of aqueous solution/recovery solution or at the waste feedstock. Agitation may be used on the polycarbonate solvent around the waste feedstock to mix the polycarbonate solvent and reduce localized saturation of the waste polycarbonate at a location directly adjacent to the waste feedstock. The agitation may be applied for any period of time or with any force sufficient to move waste polycarbonate molecules in the mixture or the recovery solution.

The application of heat may function to raise the temperature of the polycarbonate solvent to the boiling point or below of the polycarbonate solvent so that the disclosed methods can achieve desired levels of concentration, saturation, and/or dissolution times of the waste polycarbonate in the polycarbonate solvent. Application of heat to the mixture of the aqueous solution and the recovery solution may function to control polymerization and formation of the adjusted polycarbonates. The heat may be applied such that the polycarbonate solvent boils and a portion of the polycarbonate solvent transitions to a gaseous form. When the heat is applied to transition the polycarbonate solvent into a gaseous form, the vaporized polycarbonate solvent may be contained in a sealed housing or chamber above the recovery solution and/or waste feedstock as waste polycarbonate is dissolved into the polycarbonate solvent. The heat may be applied up to a boiling temperature of the polycarbonate solvent and without cleaving one or more polycarbonate chains. The heat may be applied to the polycarbonate solvent in a temperature of about 30 °C or more, about 40 °C or more, or about 50 °C or more. The heat may be applied to the polycarbonate solvent in a temperature of about 160 °C or less, about 120 °C or less, or about 80 °C or less.

After contacting the polycarbonate solvent and the waste feedstock to form the recovery solution, the waste feedstock may be removed from the recovery solution once a desirable concentration of waste polycarbonate is achieved in the recovery solution. The waste feedstock may be removed by any means sufficient to separate a solid from a liquid. The waste feedstock may be raised out of the liquid recovery solution by an appropriate container. In some examples, the waste feedstock may be raised out of the recovery solution, subsequently washed by a vapor phase polycarbonate solvent, and removed from the housing containing the recovery solution. The waste polycarbonate may have any desirable concentration in the polycarbonate solvent such that the waste polycarbonate can be repaired by one or more functional compounds in subsequent steps. The waste polycarbonate may have a concentration in the polycarbonate solvent that is equal to or less than a saturation level at or just below the boiling point of the polycarbonate solvent. The waste polycarbonate may have a concentration in the polycarbonate solvent of about 1 weight percent or more, about 5 weight percent or more or about 10 weight percent or more. The waste polycarbonate may have a concentration in the polycarbonate solvent of about 50 weight percent or less, about 30 weight percent or less, or about 20 weight percent or less.

Before contacting the recovery solution, the aqueous solution, and the chloro carbonyl compounds , the recovery solution may be subjected to one or more separation steps to remove undesirable compounds mixed with the recovery solution from the waste feedstock. Separation steps and techniques may be further described in PCT Application No. PCT/EP2024/070385 filed on July 18, 2024, which is incorporated herein in its entirety.

The recovery solution may be contacted with one or more absorption materials or scavengers that are configured to precipitate or make inert one or more non-polycarbonate compounds that were dissolved from the waste feedstock into the polycarbonate solvent. The recovery solution may be contacted with absorption materials such as one or more of activated carbon, clays, zeolites, polymeric absorbents, or any combination thereof to remove non-polycarbonate compounds found in the waste feedstocks. Scavengers may include any functional groups sufficient to bind with free hydroxyl, carboxyl, other non-polycarbonate compounds susceptible to cleaving polycarbonate chains, or a combination thereof so that undesirable interactions with the functional groups and/or waste polycarbonates are mitigated or avoided. Examples of scavenger compounds may include one or more of isocyanates, amines, esters, epoxides, anhydrides, carboxylic acids, or any combination thereof. After reacting with one or more non-polycarbonate compounds in the recovery solution, the scavengers and/or absorption compounds may be removed as liquids or solids as described herein.

If the non-polycarbonate compounds are not precipitated with the scavenger and/or absorption materials, the non-polycarbonate compounds may be removed by one or more separation techniques configured to remove liquids from liquids, such as though solvent extraction, distillation, or any combination thereof. Solids may be present in the recovery solution due the above precipitation by the scavenger and/or absorption materials or by moving through the plurality of perforations in the perforated container. Solids as described herein include gels and/or solids that are phase separated from the recovery solution. The recovery solution may have any solid non-polycarbonate compounds removed from the recovery solution before addition of the functional compounds to avoid undesired side reactions. The solids may be removed by any known techniques sufficient to separate a solid from a liquid. The solids may be removed from the recovery solution through filtration, decantation, precipitation, sedimentation, evaporation, centrifugation, solvent extraction, reverse osmosis, or any combination thereof. The solids may be filtered by using a filter having pores that are a width sufficiently small to remove solids from the recovery solution. For example, the pores may have a width of 0.1 microns or more, about 10 microns or more, or about 100 microns or more. The pores may have a width of about 10 mm or less, about 5 mm or less, or about 1 mm or less. Liquids may be removed by any separation technique described herein. Some non-polycarbonate compounds that do not interfere with the polycarbonate compounds or functional compounds may remain in the recovery solution until the polycarbonate solvent and adjusted polycarbonates are removed.

Once the waste polycarbonate or a portion thereof is dissolved into the polycarbonate solvent such that a recovery solution is formed, the recovery solution may be contacted with one or more precursor functional compounds to adjust the waste polycarbonate and form a precursor to the adjusted polycarbonate prior to addition of the aqueous solution or reactor functional compounds to adjust the waste polycarbonate in the presence of the aqueous solution to form the adjusted polycarbonate. The one or more reactor or precursor functional compounds may chain terminate, chain extend, or branch the waste polycarbonate such the adjusted polycarbonate has increased molecular weight and/or properties and reduced hydroxyl and/or carboxyl compounds present in the recovery solution. Due to degradation from consumer or industrial use, the waste polycarbonate may have a number or content of free hydroxyl and/or carboxyl groups as described herein along and/or pendant from the backbone and/or on the ends configured to react with other polycarbonate monomers or polymers, hydroxyl containing compounds, chloro carbonyl compounds, or functional groups such that a desirable adjusted polycarbonate is formed. In some examples, no residues of functional compounds are included at branching sites along the backbone of the adjusted polycarbonate and branching occurs between contacting free hydroxyl and/or carboxyl groups of waste and/or virgin polycarbonate or hydroxyl and/or carboxyl containing compounds. The hydroxyl and/or carboxyl groups along and/or pendant from the backbone may be useful for branching and may be measured by known analytical techniques before polymerizing the waste polycarbonate with other components. The one or more reactor or precursor functional compounds may increase the number and/or weight average molecular weight of the waste polycarbonate when contacted with the free hydroxyl and/or carboxyl groups. The weight and/or number average molecular weight may increase by a percentage relative to the number and/or weight average molecular weight of the waste polycarbonate before addition of the one or more reactor or precursor functional compounds. The percentage increase may be about 5 percent or more, 20 percent or more, or about 40 percent or more. The percentage increase may be about 100 percent or less, about 75 percent or less, or about 50 percent or less.

The adjusted polycarbonate may have a number and/or weight average molecular weight that is larger than a number and/or weight average molecular weight of the waste polycarbonate. The weight average molecular weight of the adjusted polycarbonate may be about 10 kg/mol or larger, about 30 kg/mol or larger, or about 50 kg/mol or larger relative to the waste polycarbonate. The weight average molecular weight of the adjusted polycarbonate may be about 70 kg/mol or larger, about 90 kg/mol or larger, or about 100 kg/mol or larger relative to the waste polycarbonate. The adjusted polycarbonate may have a weight average molecular weight of about 10 kg/mol or more, about 20 kg/mol or more, about 30 kg/mol or more, about 40 kg/mol or more. The adjusted polycarbonate may have a weight average molecular weight of about 120 kg/mol or less, about 90 kg/mol or less, or about 60 kg/mol or less, or above 40 kg/mol or less.

The number average molecular weight of the adjusted polycarbonate may be about 3 kg/mol or larger, about 10 kg/mol or larger, or about 20 kg/mol or larger relative to the waste polycarbonate. The number average molecular weight of the adjusted polycarbonate may be about 30 kg/mol or larger, about 40 kg/mol or larger, or about 50 kg/mol or larger relative to the waste polycarbonate. The adjusted polycarbonate may have a number average molecular weight of about 10 kg/mol or more, about 20 kg/mol or more, about 30 kg/mol or more, about 40 kg/mol or more. The adjusted polycarbonate may have a number average molecular weight of about 120 kg/mol or less, about 90 kg/mol or less, or about 60 kg/mol or less, or above 40 kg/mol or less. The adjusted polycarbonate may have a polydispersity index of about 5 or less, about 4.5 or less, about 4 or less, about 3.5 or less, about 3 or less, or about 2.5 or less. The polydispersity index may be 1.5 or more, about 2.0 or more, or about 2.5 or more.

The branching may be sufficient to provide an adjusted polycarbonate polymer which exhibits desirable flame retardancy and low temperature impact properties. The degree of branching impacts the Mz+1, which is in direct relation to the degree of branching. The polymers with the Mz+1 disclosed herein have an appropriate degree of branching. The adjusted polycarbonate polymer may have a z-average molecular weight (M_{z}) and/or M_{z+1} sufficiently high to achieve low temperature impact resistance and flame retardancy. The M_{z} of the adjusted polycarbonate may be about 40 kg/mol or more, about 60 kg/mol or more, about 80 kg/mol or more. The M_{z} of the adjusted polycarbonate may be about 120 kg/mol or less, about 100 kg/mol or less, about 90 kg/mol or less. The adjusted polycarbonate may have a ratio of z-average/weight average molecular weight of about 1.5 or more, about 1.6 or more, about 1.7 or more, about 1.8 or more, about 1.9 or more, about 2.0 or more. The ratio of z-average/weight average molecular weight may be about 3.0 or less, about 2.6 or less, or about 2.2 or less.

The M_{z+1} may be sufficiently large such that desirable branching is present in the adjusted polycarbonate and/or the adjusted polycarbonate has sufficient flame retardancy and low temperature impact properties. The M_{z+1} of the adjusted polycarbonate may be about 60,000 g/mol or more, about 80,000 g/mol or more, about 100,000 kg/mol or more. The M_{z+1} of the adjusted polycarbonate may be about 300,000 g/mol or less, about 240,000 g/mol or less, about 180,000 g/mol or less. Relative to the waste or virgin polycarbonates, the M_{z+1} of the adjusted polycarbonate may be larger by about 10,000 g/mol or more, about 30,000 g/mol or more, or about 50,000 g/mol or more. The M_{z+1} of the adjusted polycarbonate may be larger by about 100,000 g/mol or less, about 80,000 g/mol or less, or about 60,000 g/mol or less. The adjusted polycarbonate may have a ratio of M_{z+1}/weight average molecular weight that is sufficiently large to achieve desirable viscosity, flame retardancy, and/or low temperature impact properties. The ratio of M_{z+1}/weight average molecular weight of the adjusted polycarbonate may be about 2.0 or more, about 2.5 or more, about 3.0 or more, or about 3.5 or more. The ratio may be about 5.0 or less, about 4.5 or less, or about 4.0 or less.

The adjusted polycarbonates may have polymodal molecular weight distributions. Polymodal may mean that the polymer mixture contains more than one molecular weight peak when the molecular weight is measured. This may mean that the mixture shows a number of molecular weight distribution peaks at multiples of the average molecular weight of the adjusted polycarbonates. The polymer molecular weight may be measured by gel permeation chromatography (GPC) using narrow molecular weight polystyrene standards and tetrahydrofuran (THF) as solvent, standard integrating software issued together with a UV-detector. All molecular weights are determined by GPC, by the same analysis (Mw, Mn, MWD, Mz, Mz+1 , etc), molecular weights may be reported in units of g/mole or Dalton wherein 1 Dalton is equal to 1 g/mole.

Unlike small molecules, the molecular weight of a polymer is generally not one unique value. Rather, a given polymer will have a molecular weight distribution (MWD). The distribution generally will depend on the way the polymer is produced. For polymers the distribution of molecular weight is a function P(Mi), where P(Mi) is the probability, or fraction of molecules having a molecular weight Mi. As used herein, molecular weight distribution describes the distribution of the molecular weight of a polymer. The molecular weight of the adjusted polycarbonate polymer, refers to the molecular weight of the soluble fraction of the matrix. The molecular weight may be measured using gel permeation chromatography. Different solvents can be used, and a typical solvent is tetrahydrofuran. Polystyrene standards may be used for calibration. The average molecular weight may be characterized by the number average molecular weight (i.e., Mₙ), the weight average molecular weight (i.e., M_{w}), the z-average molecular weight (i.e., M_{z}), Z+1 average molecular weight (i.e., M_{z+1}), or any combination thereof. The polydispersity index is defined as the ratio of the weight average molecular weight, Mw, and the number average weight, Mn.

Adjusted polycarbonates described herein may have enhanced "shear thinning" than a virgin polycarbonate of a similar weight and/or number average molecular weight, which may indicate that sufficient or desirable branching and/or chain extension has occurred in the adjusted polycarbonate relative to virgin polycarbonates made from virgin monomers instead of waste polycarbonate. The degree of shear thinning may be impacted by the amount of branching and/or chain extension in the adjusted polycarbonate and the amount of branching and/or chain extension may be at least in part based on the amount of free hydroxyl and/or carboxyl groups on the inputted waste polycarbonate. In short, higher degrees of branching and/or chain extension may provide shear sensitivity improvements relative to virgin polycarbonate that is not made with any waste polycarbonate. These measurements of shear sensitivity can be done by standard techniques with oscillatory shear rheometry using a Dynamic Mechanical Spectrometer (DMS). For example, shear sensitivity of polycarbonate may include measuring the complex viscosity at different frequencies in a frequency range of 0.1 to 1000 radians per second (rad.s-1 ) by DMS (Dynamic Mechanical Spectroscopy) at a temperature of 260°C.

The melt viscosity at 0.3 to 1 s ¹ angular frequency of the adjusted polycarbonate may be at least 10 % higher than the virgin polycarbonate as disclosed herein when measured at 260°C and may be at least 20% or more, 50% or more, 100% or more, or 150% or more relative to virgin polycarbonate. The adjusted polycarbonate while having a desirable high viscosity at low shear, the viscosity at high shears (e.g., 100 to 1000 s ¹) may be essentially the same (e.g., less than 10% different) than a similar virgin polycarbonate without any waste polycarbonate. The crosslinked polymers as a result of their above desirable rheological properties tend to have a higher viscosity ratio (low shear viscosity "0.3 to 1 s ¹" /higher shear viscosity"100 to 1000 s ¹" (or any angular frequency therebetween)) than the same virgin polycarbonate made without any waste polycarbonate. Generally, the viscosity ratio is at least 25, 30 or 40 or even 45 or higher for adjusted polycarbonate polymer, whereas for the similar virgin polycarbonate made without waste polycarbonate, the viscosity ratio tends to be about 20 or less.

The adjusted polycarbonate may have a melt flow rate sufficient to be used in downstream processes with similar quality as virgin polycarbonate. The melt flow rate may be similar or substantially the same as virgin polycarbonate. The melt flow rate of the adjusted polycarbonate may be greater or less than the melt flow rate of the waste polycarbonate due to having an adjusted molecular weight from addition of the one or more functional compounds. The melt flow rate of the adjusted polycarbonate may be about 1 g/10 min or more, about 5 g/10min or more, or about 20 g/10min or more. The melt flow rate of the adjusted polycarbonate may be about 80 g/10 min or less, about 60 g/10min or less, or about 40 g/10min or less, according to ASTM D-1238. The melt flow rate may be determined by measuring the grams passing through a standard die (2.095 x 8 mm) for 10 minutes (g/10 min) as determined at 300°C under a load of 1.2 kg according to the ISO 1133 standard.

After forming the adjusted polycarbonate, the hydroxyl and/or carboxyl groups may be present in a sufficiently low amount to reduce or avoid chain cleavage in the polycarbonates. After adding the reactor or precursor functional compounds to the recovery solution, the functional compounds may react with hydroxyl and/or carboxyl groups such that the recovery solution is free or essentially free (e.g., 0.1, 0.01, or 0.001 weight percent or less present) of hydroxyl and/or carboxyl groups. The one or more functional compounds may reduce the amount of free hydroxyl and/or carboxyl groups by 50 mole percent or more, 70 mole percent or more or 90 mole percent or more. The one or more functional groups may reduce the amount of free hydroxyl and/or carboxyl groups by 95 mole percent or more 98 mole percent or more or 99 mole percent or more. The molar amount of hydroxyl and/or carboxyl groups present in the recovery solution may be reduced by the molar amount of functional groups contained in the one or more functional compounds and configured to react with hydroxyl and/or carboxyl groups.

The reactor or precursor functional compounds, the aqueous solution, the chloro carbonyl compounds or precursors thereof, and/or the recovery solution may be agitated and/or mixed to increase the rate of reaction and/or adjust the molecular weight and/or properties of polycarbonates. The reactor or precursor functional compounds, the aqueous solution, the chloro carbonyl compounds or precursors thereof, and/or the recovery solution may be agitated by any technique as described in relation to contacting the polycarbonate solvent and the waste feedstock. The reactor or precursor functional compounds, the aqueous solution, the chloro carbonyl compounds or precursors thereof, and/or the recovery solution may be heated by any technique as described in relation to contacting the polycarbonate solvent and the waste feedstock. The reactor or precursor functional compounds, the aqueous solution, the chloro carbonyl compounds or precursors thereof, and/or the recovery solution may be heated to any desired temperature without damaging and/or cleaving the adjusted polycarbonate.

The reactor or precursor functional compounds, the aqueous solution, the chloro carbonyl compounds or precursors thereof, and/or the recovery solution may be heated to any temperature sufficient to react the functional compounds and the waste polycarbonate and/or to react with free hydroxyl and/or carboxyl groups (e.g., on the polycarbonate backbone or ends or from the hydroxyl and/or carboxyl containing compounds). The functional compounds and the recovery solution may be heated to any temperature sufficient to react the cause the one or more functional compounds to chain terminate, chain extend, and/or branch the polycarbonate such that a desirable molecular weight is achieved. The functional compounds and the recovery solution may be heated to a temperature that is sufficiently low to avoid chain cleavage in the waste and/or adjusted polycarbonate. The functional compounds may be heated to a temperature of about 30 °C or more, about 50 °C or more, or about 70 °C or more. The functional compounds may be heated to a temperature of about 150 °C or less, about 120 °C, or about 100 °C. In some examples, no heat is applied and the reaction is conducted at ambient temperatures (i.e., about 25 °C).

After forming the adjusted polycarbonates, the recovery solution may be subjected to a step of recovering and/or separating the polycarbonate solvent and/or adjusted polycarbonates. The polycarbonate solvent and the adjusted polycarbonate may be removed in a simultaneous fashion or separately in series. The recovery solution may be subjected to a process step that separates the polycarbonate solvent and the adjusted polycarbonate at the same time so that the adjusted polycarbonate can be used in downstream processes and the polycarbonate solvent is reusable to recover additional waste polycarbonate through a recycle pathway. The recovery solution may be subjected to any techniques sufficient to separate two components in a liquid state. The recovery solution may be subjected to one or more of devolatilization, centrifugation, filtration, distillation, or any combination thereof to separate the adjusted polycarbonate and the polycarbonate solvent. Compounds that remain after removing the polycarbonate solvent and adjusted polycarbonate may be disposed of or subjected to further separation steps to recover desirable compounds and recycle them. A non-solvent may be contacted with the with recovery solution to precipitate the adjusted polycarbonate from the polycarbonate solvent in a form that is free or essentially free of impurities or that may be subjected to further separation techniques. Non-solvents may include one or more compounds that are immiscible with polycarbonate solvent, such as water, aliphatic hydrocarbons, alcohols, acetonitrile, acetone, or any combination thereof.

The recovered adjusted polycarbonate may be subjected to one or more further treatment steps to remove undesirable compounds. The adjusted polycarbonate may be subjected to one or more steps to remove volatile compounds, such as residual solvent or moisture. The adjusted polycarbonate may be subjected to one or more steps to remove additives that remain in the waste feedstock so that the user can control the amount and/or combination of additives in the final polycarbonate composition. the adjusted polycarbonate may be subjected to drying, absorption, filtration, scavenging, or any combination thereof.

In downstream process uses, the adjusted polycarbonate may be contacted with one or more compounds desirable to make a downstream product or composition. The adjusted polycarbonate may be mixed or blended with one or more other polymers or virgin polycarbonate to achieve desirable properties. Other polymers may include polystyrene, styrene acrylonitrile, acrylonitrile butadiene, styrene, high impact polystyrene, polymethylmethacrylate, polyolefins or any combination thereof. The adjusted polycarbonate may be mixed with one or more additives sufficient to achieve desirable properties. The additives may include one or more of fillers, flame retardants, pigments, UV stabilizers, antioxidants, mold release agents, dyes, or any combination thereof.

The polycarbonate solvent and/or the polar protic solvent may be recycled into a new and untreated waste feedstock to recover additional waste polycarbonate, begin the process again, and avoid undesirable disposal or loss of the polycarbonate solvent. The polycarbonate solvent and/or the polar protic solvent may be separated from the recovery solution and moved back into a reservoir or the waste feedstock through one or more recycle pathways that extend between chambers. Before being recycled back into contact with the waste feedstock, the polycarbonate solvent and/or the polar protic solvent may be subjected to one or more separation steps to remove undesired impurities. The polycarbonate solvent and/or the polar protic solvent may be subjected to drying, centrifugation, filtration, distillation, or any combination thereof.

Before contacting the waste feedstock and the one or more polycarbonate solvents, the waste feedstock may be subjected to one or more pretreatment steps (such as by addition of a solvent configured to dissolve non-polycarbonate compounds and does not dissolve polycarbonate) to separate one or more non-polycarbonate compounds from the waste feedstock to recover desired compounds and/or to avoid undesirable reactions in the recovery feedstock. The waste feedstock may be subjected to any pretreatment step configured to remove one or more non-polycarbonate compounds or to prepare the waste feedstock for more efficient extraction of waste polycarbonate. The waste feedstock may be structurally altered to expose surface area of the components in the waste feedstock and/or prepare the waste feedstock for downstream processing steps, which may be conducted by shredding, grinding, pressing, dismantling, sorting, or any combination thereof. The waste feedstock may be treated to remove one or more non-polycarbonate compounds, such as inorganic compounds, non-polycarbonate polymers (e.g., polystyrene, styrene acrylonitrile resin, acrylonitrile butadiene styrene, high impact polystyrene, polymethylmethacrylate, other polymers commonly blended with polycarbonate, etc.), small organic molecules, or any combination thereof. The waste feedstock in the pretreatment step may be subjected to melting, magnetic field, density separation, freezing, agglomeration, washing, chemical removal of adhesives, selective dissolution of other polymers, drying, heating, cooling, or any combination thereof.

In the aqueous solution and the recovery and/or organic solutions, one or more polymerization catalysts may be added in amounts sufficient to facilitate formation of the desired adjusted polycarbonates. The polymerization catalyst may be added as a single catalyst or a combination of catalysts, such as two or more, three or more, four or more, or a plurality of polymerization catalysts. The polymerization catalyst may be soluble in the polycarbonate solvents and/or the protic polar solvents described herein. The polymerization catalyst may be added in an amount of 0.01 weight percent or more, 0.05 weight percent or more, or 0.1 weight percent or more, based on the total weight of the polymer. The polymerization catalyst may be added in an amount of 5 weight percent or less, 2 weight percent or less, or 1 weight percent or less. The polymerization catalyst may have a structure sufficient to facilitate reaction of two functional groups such that a polycarbonate polymer or oligomer is formed. The polymerization catalyst may include one or more of an amine coupling catalyst, such as a secondary or tertiary aliphatic or aromatic amine. A secondary or tertiary aliphatic amine may include diethyl amine, triethylamine, tripropylamine, or tributylamine, or any combination thereof. A cyclic tertiary amine may include dimethyl pyridine. The polymerization catalyst may include one or more of a Lewis base or Bronsted base, trans esterification catalyst, trans carbonylation catalyst, or any catalyst other sufficient catalyst used in carbonate formation.

The aqueous solution may comprise any components that are soluble in a polar protic solvent, such as water. The aqueous solution may be formed by contacting the polar protic solvent (e.g., water) and an alkali hydroxide. Optionally, one or more hydroxyl and/or carboxyl containing compounds (e.g., bisphenol A) configured to be a monomer in a polycarbonate polymer and/or oligomer may be contacted with and/or dissolved in the aqueous solution. In the aqueous solution, the one or more hydroxyl and/or carboxyl containing compounds may be present in a desirable ratio with the waste polycarbonate such that adjusted polycarbonates can be formed with desirable number and/or weight average molecular weights. For example, the amount of hydroxyl and/or carboxyl containing compounds may be configured based on the number of free hydroxyl and/or carboxyl groups in the recovery solution (e.g., from the waste polycarbonate polymers or oligomers or other hydroxyl and/or carboxyl containing compounds). Optionally, a reactor functional group configured to end cap, chain extend, branch, or any combination thereof may be contacted with and/or dissolved in the aqueous solution. The aqueous solution may contain a sufficient concentration of alkali hydroxide to be basic and maintain pH at levels described herein. Reactor functional compounds and/or hydroxyl and/or carboxyl containing compounds may be added to the aqueous solution and/or the recover solution before, during, or after contacting the aqueous solution, the recovery solution, and/or the chloro carbonyl or precursors thereof.

The alkali hydroxide may be any compound sufficient to increase the basicity of the aqueous solution or the mixture of the aqueous solution and the recovery and/or organic solutions. The alkali hydroxide may be present in the aqueous solution or the mixture of the aqueous solution and the recovery and/or organic solutions in an amount sufficient to increase the basicity of the aqueous solution or the mixture of the aqueous solution and the recovery and/or organic solutions. An initial amount of the alkali hydroxide may be first contacted with the aqueous solution and a second amount of the alkali hydroxide may be subsequently contacted with the mixture of the aqueous solution and the recovery and/or organic solutions such that a desirable pH is maintained in the mixture. The amount of alkali hydroxide may be at least partially dependent on the amount of hydroxyl and/or carboxyl containing compounds (whether as virgin monomers or recycled monomers from the recovery solution) present in the mixture. The amount of alkali hydroxide may be added as a separate solution in any desirable molarity such that pH of the mixture is controlled. The molarity of separate solution (which may also be referred to as a caustic solution) may be any amount sufficient to increase basicity of the mixture. The molarity may be about 2 M or more, about 4 M or more, or about 6 M or more. The molarity of the solution may be about 12 M or less, about 10 M or less, or about 8 M or less. The alkali hydroxide may be a compound sufficient to bind with a proton or deprotanate another compound. The alkali hydroxide may include one or more of sodium hydroxide, lithium hydroxide, potassium hydroxide, or any combination thereof.

The polar protic solvent may be any solvent that is essentially immiscible with the polycarbonate solvent. Essentially immiscible means that two components phase separate at a certain molar ratio that is greater than a miscible molar ratio. The polar protic solvent may be configured to dissolve one or more of the alkali hydroxide, the hydroxyl and/or carboxyl containing compounds, the reactor and/or precursor functional compounds, the polymerization catalyst, or any combination thereof. The polar protic solvent may be a single solvent or a combination of solvents that in combination are immiscible with the organic and/or recovery solutions. The polar protic solvent may be essentially immiscible with the chloro carbonyl or precursor thereof and/or a polycarbonate polymer and/or oligomer. The polar protic solvent may include at least one hydrogen atom bonded with an electronegative atom, such as a nitrogen or an oxygen atom. Without the presence of other components, the polar protic solvent may be have a pH that is below 7. The polar protic solvent may include one or more of water, methanol, ethanol, isopropanol, n-propanol, tert-butanol, n-butanol, ammonia, acetic acid, formic acid, or any combination thereof.

The chloro carbonyl compounds or precursors thereof may be configured to facilitate formation of the chains of the polycarbonate polymers and/or oligomers by reacting with another appropriate monomer. When contacted with either or both of the aqueous or recovery solution, the chloro carbonyl may first be contacted with an appropriate polycarbonate solvent to form an organic solution. The chloro carbonyl compounds or precursors thereof may be added in any particular order to the mixture (i.e., recovery solution and aqueous solution), such as first with the recovery solution then addition in combination to the aqueous solution or first to aqueous solution and then addition in combination to the recovery solution. The chloro carbonyl or precursors thereof may be presence in an amount sufficient react with free hydroxyl and/or carboxyl groups in the mixture and form polycarbonate oligomers and/or polymers. The free hydroxyl and/or carboxyl groups present in the mixture may be at least partially dependent on the amount of free hydroxyl and/or carboxyl groups on the backbone or at the end of the waste and/or virgin polycarbonate polymers and/or oligomers or in the hydroxyl and/or carboxyl containing compounds present in the mixture. The cholo carbonyls may be present in in a desirable stochiometric ratio with the free hydroxyl and/or carboxyl groups of hydroxyl and/or carboxyl containing compounds and/or the waste and/or virgin polycarbonate polymers and/or oligomers. The ratio of chloro carbonyl compounds to free hydroxyl and/or carboxyl groups may be 1:1 or more, 2:1 or more, or 4:1 or more. The ratio of chloro carbonyl compounds to free hydroxyl and/or carboxyl groups may be 20:1 or less, 10:1 or less, or 6:1 or less. In the present disclosure, precursors of the chloro carbonyl means a compound that forms a carbonyl in the polar protic solvent and/or polycarbonate solvent configured to facilitate coupling of polycarbonate monomers, oligomers, and/or polymers to form adjusted polycarbonates. The chloro carbonyl or precursor thereof may be one or more of phosgene, diphosgene, triphosgene, or a combination thereof. Instead of chlorine, other halogens may be replace the chlorine on the chloro carbonyl. In place of a chloro carbonyl, other carbonyl compounds that form carbonyls in the mixture and facilitate formation of polycarbonate chains may be used. For example, any compounds configured to form a carbonyl that facilitates coupling of polycarbonate monomers, oligomers, and/or polymers may be used.

The methods disclosed herein to form adjusted polycarbonates may utilize multiple different sequences of steps to yield adjusted polycarbonates with desirable amounts of waste polycarbonates included or polymeric properties. For example, different sequences of steps may yield varying levels of branching along the backbone of the waste polycarbonate, since waste polycarbonates tend to have free hydroxyl and/or carboxyl groups along the backbone of the polymer chains from degradation during consumer use.

For example, the aqueous solution (optionally including desirable hydroxyl and/or carboxyl containing compounds and/or reactor functional compounds) and the chloro carbonyl compounds or precursors thereof may be contacted in the presence of a polycarbonate solvent such that virgin polycarbonate polymers or oligomers are formed in the mixture, before addition of the recovery solution. Before addition of the recovery solution, the virgin polycarbonates may be subjected to one or more hydroxylation steps that introduce free hydroxyl and/or carboxyl groups at the ends or along the backbone of the virgin polycarbonates, which may be useful for subsequent branching or chain extension of the virgin polycarbonates with waste or other virgin polycarbonates polymers or oligomers. Whether or not hydroxylation is performed, one or more reactor functional compounds may be used before or during addition of the recovery solution to end cap, chain extend, and/or branch the virgin polycarbonates. Once the virgin polycarbonate oligomers and/or polymers are formed and/or modified in a desirable manner, the recovery solution and other optional components (e.g., functional compounds) may be added to form the adjusted polycarbonates.

In another example, no virgin polycarbonates may be formed in the aqueous solution before addition of the recovery solution comprising the waste polycarbonate. The recovery solution may include free hydroxyl and/or carboxyl groups on the hydroxyl and/or carboxyl containing compound and the waste polycarbonate polymers and/or oligomers that form the adjusted polycarbonates in the interfacial polymerization, with minimal or no formation of virgin polycarbonate polymers and/or oligomers. In another example, the chloro carbonyl compounds and the recovery solution, which may optionally induce some polymerization, are contacted before addition of the aqueous solution. The waste polycarbonates of the recovery solution may be modified as described herein before or after combination with the chloro carbonyl compounds through one or more precursor functional compounds such that desirable end capping, chain extension, and/or branching may be induced before addition of the aqueous solution. This may be desirable to control branching and/or molecular weights before addition of aqueous solution.

After combining the chloro carbonyl compounds, the aqueous solution, and the recovery solution, the formed adjusted polycarbonates may include any desirable amount of waste polycarbonates that has sufficient properties and/or meets industry needs. The amount of waste polycarbonate included in the adjusted polycarbonates may be a weight percent based on the total weight of the adjusted polycarbonate. The adjusted polycarbonates described herein may include some amount of waste polycarbonate while maintaining desirable polydispersity index, phenolic OH content, weight and/or number average molecular weight, or a combination thereof. The weight percent (based on the total weight of the composition or the polycarbonate polymer) of waste polycarbonate may be about 1 percent or more, 10 percent or more, about 20 percent or more, or about 50 percent or more. The weight percent may be about 100 percent or less, about 80 percent or less, or about 60 percent or less. The weight percent (based on the total weight of the composition or the polycarbonate polymer) of virgin polycarbonate may be about 1 percent or more, 10 percent or more, about 20 percent or more, or about 50 percent or more. The weight percent may be about 90 percent or less, about 80 percent or less, or about 60 percent or less.

After combining the chloro carbonyl compounds, the aqueous solution, and the recovery solution to form the mixture, the mixture may be agitated such that a homogenous and/or heterogenous mixture (e.g., a dispersion) of the immiscible components is formed and formation of the adjusted polycarbonates occurs. Agitation may be applied in any desirable fashion, such as by stirring, sonication, shaking, vibrating, pneumatics, hydraulic agitation, or any combination thereof. The agitation of the mixture may be applied for a portion of or until desirable amounts of the adjusted polycarbonates are formed. As discussed herein, a solution of the alkali hydroxide may be added to the mixture during the agitation to control the pH of the mixture.

After forming the mixture of the chloro carbonyl compounds, the aqueous solution, and the recovery solution, the mixture may be agitated or mixed for any time appropriate to form the adjusted polycarbonate. As described herein, steps of hydroxylating or adding functional compounds may be included during at time of mixing the solution. Agitation may be applied to the mixture over the entire time that the chloro carbonyl compounds, the aqueous solution, and the recovery solution are mixed or for only a portion of time sufficient to form desirable adjusted polycarbonates. The chloro carbonyl compounds, the aqueous solution, and the recovery solution may be agitated or mixed for about 24 hours or less, about 12 hours or less, or about 4 hour or less. The chloro carbonyl compounds, the aqueous solution, and the recovery solution may be agitated or mixed for about 2 hours or less, about 1 hour or less, or about 30 minutes or less.

Once desirable formation of adjusted polycarbonates has occurred, cooling may be applied to the mixture such that components of the mixture are desirably contained in the housing used for the reaction. Cooling may be applied to the mixture such that a temperature sufficient to achieve phase separation between the aqueous solution and the recovery solution and/or organic solution. The cooling may be applied before, during, or after formation of the adjusted polycarbonates such that desirable phase separation is achieved and/or the temperature of the mixture is maintained below a boiling point of the polycarbonate solvent.

After desirable formation of the adjusted polycarbonate occurs in the mixture, the combination of the adjusted polycarbonate and the polycarbonate solvent may phase separate from the aqueous solution. Once phase separation occurs, the aqueous solution and the combination of the adjusted polycarbonate and the polycarbonate solvent may be separated by any desirable techniques sufficient to separate components. For example, decantation, funnel separation, centrifugation, filtration, washing, or any combination thereof may be applied such that the combination of the adjusted polycarbonate and the polycarbonate solvent are removed from the aqueous solution. Other separation techniques described herein may also be applied. Once removed, the polycarbonate solvent and the adjusted polycarbonate may be separated from each other by solvent evaporation, devolatilization, and/or crystallization such that the adjusted polycarbonate is yielded in a solid form. If desired, additional separation and/or purification steps may be applied to yield the adjusted polycarbonates in a desirable form. Once separation has occurred, the polar protic solvent and the polycarbonate solvent may be recycled and used again to recover waste polycarbonate and to form adjusted polycarbonates.

The present disclosure may also provide for a polymerizable composition including one or more of waste polycarbonates, polycarbonate solvents, chloro carbonyl compounds or precursors thereof, and aqueous solutions that are polymerizable to form an adjusted polycarbonate. The polymerizable composition may optionally include a polymerization catalyst, virgin or recycled hydroxyl and/or carboxyl compounds, functional compounds, any other component described herein, or any combination thereof. A polymerizable composition as described herein may refer to a composition before an adjusted polycarbonate is formed. Polymerizable compositions as defined by this disclosure may include ingredient amounts, ratios, features, and/or elements described in relation to the methods and compositions disclosed herein.

The disclosed compositions of adjusted polycarbonates may be used to prepare structures comprising or containing them utilizing any known processes, such as extrusion, molding, thermoforming, and the like. The disclosed compositions of adjusted polycarbonates may be molded using procedure known in the art. The polycarbonate compositions may be molded into useful shaped articles by a variety of means such as injection molding, overmolding, extrusion, rotational molding, blow molding and thermoforming to form various molded articles. Such articles may include thin-walled articles for consumer goods like cellphones, MP3 players, computers, laptops, cameras, video recorders, electronic tablets, hand receivers, kitchen appliances, electrical housings, etc., e.g. a smart meter housing, and the like; electrical connectors, and components of lighting fixtures, omaments, home appliances, roofs, greenhouses, sun rooms, swimming pool enclosures, Light Emitting Diodes (LEDs) and light panels, extruded film and sheet articles; electrical parts, such as relays; and telecommunications parts such as parts for base station terminals. The present disclosure further contemplates additional fabrication operations on said articles, such as, but not limited to, molding, in-mold decoration, baking in a paint oven, lamination, and/or thermoforming. The compositions disclosed are heated to temperatures at which the composition flows, which may be above the glass transition temperatures of the polycarbonates in the composition. Such temperatures may be greater than 155 °C, above 200 °C or greater, 250 °C or greater. Such temperatures may be 400 °C or less or 300°C or less. The mold may be heated to facilitate processing such as to 60 °C or greater, 80 °C or greater or 100 °C or greater.

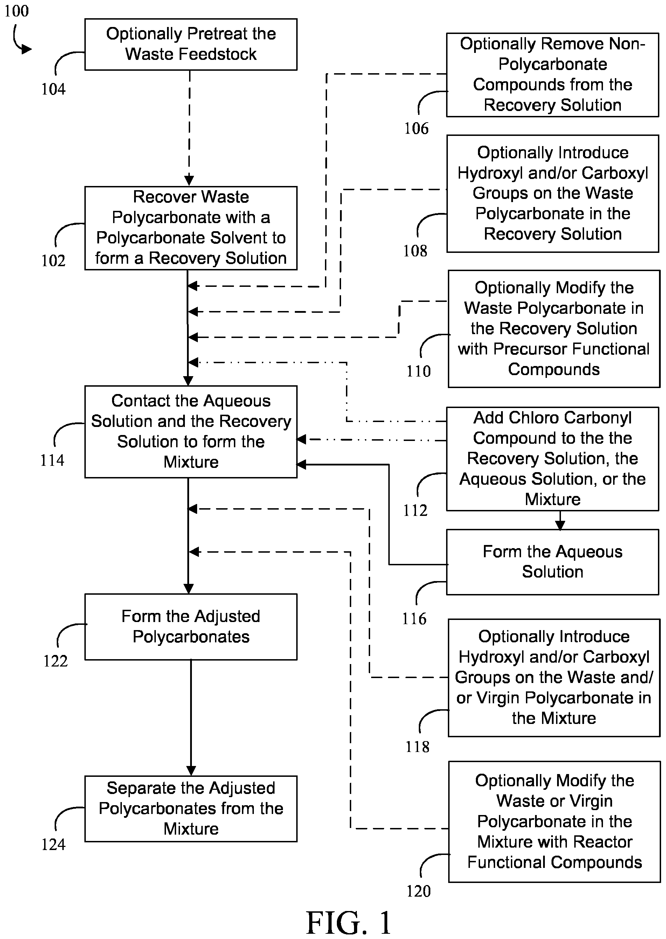

Figure 1 illustrates an example method 100 of recovering waste polycarbonate and forming adjusted polycarbonates. In a first step 102, a waste feedstock is contacted with a polycarbonate solvent to dissolve waste polycarbonate in the waste feedstock and form the recovery solution. Optionally, a pretreatment step 104 may be performed such that undesirable non-polycarbonate compounds are separated from the waste feedstock. After formation of the recovery solution, several optional steps may be performed. For example, a step 106 of removing non-polycarbonate compounds, such as small particles that are solid, may be performed, such as by filtration. In a step 108, the recovery solution may be subjected to modification to increase the number of free hydroxyl and/or carboxyl groups in the recovery solution. Increase in the free hydroxyl and/or carboxyl groups may result in more free carboxyl and/or carboxyl groups along the backbone or the terminal ends of the waste polycarbonate, which may be useful for subsequent chain extension, end capping, or branching. In a step 110, precursor functional compound may be added to modify or adjust the molecular weight, functional groups, branching, amount of phenolic or free carboxyl and/or carboxyl groups, or any combination thereof on the waste polycarbonate. Steps 106, 108, 110 can be performed in any order before steps 112, 114 to achieve desirable properties in the waste polycarbonate.

In step 112, the chloro carbonyl compound (or precursors thereof), is added to one or more of the recovery solution, the aqueous solution, or a mixture of the recovery and aqueous solutions. Separately or simultaneously, the step 114 includes contacting the aqueous solution and the recovery solution to form the mixture. Before step 112, the step 116 of forming the aqueous solution occurs by contacting a an alkali hydroxide, polar protic solvent that is essentially immiscible with the polycarbonate solvent, and optionally a hydroxyl and/or carboxyl containing compound. Where the chloro carbonyl compound in step 112 is added to the aqueous solution before the recovery solution, virgin polycarbonate may form before the recovery solution is contacted with the aqueous solution. Once the aqueous solution, the chloro carbonyl compounds, and the recovery solution are contacted and the mixture is formed, any polycarbonates (whether virgin or waste polycarbonate) may be modified through a step 118 by introducing hydroxyl and/or carboxyl groups along the polycarbonate chains or at the ends and/or through a step 120 of adding reactor functional compounds to the mixture such that the polycarbonates are end capped, chain extended and/or branched. Along any of steps 112, 114, 116, 118, 120, a polymerization catalyst and/or an alkali hydroxide may additionally be added to the mixture. After sufficient mixing, the adjusted polycarbonate is formed 122 in the mixture. After forming the adjusted polycarbonate, the adjusted polycarbonate and the mixture are separated 124 by any means discussed herein such that the adjusted polycarbonate is yielded in a solid form.

### Illustrative Embodiments

Embodiment 1. A method, comprising:
   contacting an aqueous solution comprising one or more alkali hydroxides and water, one or more chloro carbonyl compounds or a precursor thereof, and a recovery solution comprising one or more waste polycarbonates and one or more polycarbonate solvents configured to dissolve the one or more waste polycarbonates and/or the one or more chloro carbonyl compounds to form one or more adjusted polycarbonates.
Embodiment 2. The method of any one of the previous embodiments, wherein the one or more waste polycarbonates includes free hydroxyl and/or carboxyl groups along the backbone.
Embodiment 3. The method of any one of the previous embodiments, wherein the one or more adjusted polycarbonates include branching along the backbone from residues of the free hydroxyl and/or carboxyl groups along the backbone of the waste polycarbonate.
Embodiment 4. The method of any one of the previous claims, wherein the one or more adjusted polycarbonates exhibits a polymodal molecular weight distribution.
Embodiment 5. The method of any one of the previous embodiments, wherein the adjusted polycarbonate has a z-average molecular weight of about 40,000 g/mol or more.
Embodiment 6. The method of any one of the previous embodiments, wherein the one or more adjusted polycarbonates has a waste polycarbonate content of 10 percent or more.
Embodiment 7. The method of any one of the previous embodiments, wherein the aqueous solution further comprises one or more hydroxyl or carboxyl containing compounds that are not recycled.
Embodiment 8. The method of any one of the previous embodiments, wherein the waste polycarbonate includes one or more hydroxyl and/or carboxyl compounds, one or more polycarbonate polymers or oligomers having free carboxyl and/or hydroxyl groups, or any combination thereof.
Embodiment 9. The method of any one of the previous embodiments, further comprising: contacting the one or more polycarbonate solvents and a waste feed comprising the one or more waste polycarbonates in a solid state to form the recovery solution.
Embodiment 10. The method of any one of the previous embodiments, further comprising; separating the aqueous solution, the one or more polycarbonate solvents, and the one or more adjusted polycarbonate polymers to yield the one or more adjusted polycarbonate polymers in a solid state.
Embodiment 11. The method of any one of the previous embodiments, wherein the recovery solution and the one or more chloro carbonyl compounds in combination form an organic solution that is essentially immiscible with the aqueous solution.
Embodiment 12. The method of any one of embodiment 11, further comprising: during contacting of one or more of the aqueous solution, the one of more chloro carbonyl compounds, and/or the recovery solution, applying agitation to the organic and aqueous solutions to form a single mixture.
Embodiment 13. The method of embodiments 11 or 12, further comprising: contacting a polymerization catalyst with the aqueous solution and/or the organic solution.
Embodiment 14. The method of any one of the previous embodiments, wherein the combination of the aqueous and organic solutions has a pH of about 7 to about 13.
Embodiment 15. The method of any one of the previous embodiments, further comprising: maintaining a pH of about 11 to about 13 by addition of a pH solution of the alkali hydroxide during formation of the one of more adjusted polycarbonates.
Embodiment 16. The method of any one of the previous embodiments, further comprising: before contacting the recovery solution, the aqueous solution, and the one or more chloro carbonyl compound, removing compounds in a solid state in the recover solution of a size of 10 mm or less.
Embodiment 17. The method of any one of the previous embodiments, further comprising: before contacting the recovery solution, the aqueous solution, and the one or more chloro carbonyl compound, removing the compounds in a solid state in the recover solution of a size of 100 microns or less.
Embodiment 18. The method of any one of the previous embodiments, further comprising: before contacting the recovery solution, the aqueous solution, and the one or more chloro carbonyl compound, contacting the recovery solution with one or more precursor functional compounds configured to chain terminate, chain extend, and/or branch the one or more waste polycarbonates such that number and/or weight average molecular weight and/or flame retardancy is increased in the one or more waste polycarbonates.
Embodiment 19. The method of anyone of the previous embodiments, wherein the aqueous solution further comprises one or more reactor functional compounds configured to chain extend, chain terminate, and/or branch the one or more waste polycarbonates such that number and/or weight average molecular weight and/or flame retardancy is increased in the one or more adjusted polycarbonate.
Embodiment 20. The method of any one of the previous embodiments, further comprising: before contacting the recovery solution, the aqueous solution, and the one or more chloro carbonyl compound, removing one or more hydroxyl and/or carboxyl containing compounds from the recovery solution such that content of free hydroxyl and/or carboxyl groups is reduced in the recovery solution.
Embodiment 21. The method of embodiment 20, wherein the one or more hydroxyl and/or carboxyl containing compounds have free hydroxyl and/or carboxyl groups and a molecular weight of 1000 g/mol or less.
Embodiment 22. The method of embodiment 20, wherein the one or more hydroxyl and/or carboxyl containing compounds comprise one or more bisphenol compounds.
Embodiment 23. The method of any one of the previous embodiments, further comprising: before contacting the recovery solution, the aqueous solution, and the one or more chloro carbonyl compound, removing one or more additives from the recovery solution such that additive content in the recovery solution is reduced.
Embodiment 24. The method of embodiment 23, wherein the one or more additives comprise one or more of dyes, antioxidants, UV stabilizers, flame retardant compounds, mold release agents, or any combination thereof.
Embodiment 25. The method of any one of the previous embodiments, further comprising: before contacting the recovery solution, the aqueous solution, and the one or more chloro carbonyl compound, hydroxylating the one or more waste polycarbonates to increase the free hydroxyl and/or carboxyl groups at the end or on the chain of the one or more waste polycarbonates.
Embodiment 26. The method of embodiment 25, wherein the step of hydroxylating the one or more waste polycarbonates comprises:
   oxidating the one or more waste polycarbonates to increase the free hydroxyl and/or carboxyl groups of the one or more waste polycarbonates;
   exposing the one or more waste polycarbonates to ultraviolet light to increase the free hydroxyl and/or carboxyl groups of the one or more waste polycarbonates; or conducting hydrolysis on the one or more waste polycarbonates to increase the free hydroxyl and/or carboxyl groups of the one or more waste polycarbonates.
Embodiment 27. The method of any one of the previous claims, further comprising: before contacting the recovery solution, the aqueous solution, and the one or more chloro carbonyl compound, contacting the one or more chloro carbonyl compound and the polycarbonate solvent with the aqueous solution to form virgin polycarbonates;
   sequentially or simultaneously:
   i. contacting the recovery solution with the one or more chloro carbonyl compound to form the organic solution; and
   ii. contacting the organic solution and the virgin polycarbonate to form the one or more adjusted polycarbonates.
Embodiment 28. The method of any one of the previous embodiments, wherein the one or more reactor and/or precursor functional compounds comprises a chain terminator, a chain extender, a branching agent, a linking compound, a functional flame retardant, or any combination thereof.
Embodiment 29. The method of embodiment 28, wherein the chain terminator, the chain extender, and/or the branching agent have a functionality of at least 1 with a hydroxyl and/or carboxyl group.
Embodiment 30. The method of embodiment 29, wherein the linking compound has a functionality of at least 1 with the functional flamed retardant and has a functionality of at least one with the chain extender, the branching agent, a free hydroxyl and/or carboxyl group of the one or more waste polycarbonates, or another compound that contains one or more hydroxyl and/or carboxyl groups.
Embodiment 31. The method of any one of the previous embodiments, wherein the one or more chloro carbonyl comprises phosgene, tri-phosgene, di-phosgene, derivatives thereof, or any combination thereof.
Embodiment 32. The method of any one of the previous embodiments, wherein the alkali hydroxide comprises one or more of sodium hydroxide, potassium hydroxide, lithium hydroxide, or any combination thereof.
Embodiment 33. The method of any one of the previous embodiments, wherein the one or more adjusted polycarbonates has a weight or number average molecular weight that is greater than the one or more waste polycarbonates.
Embodiment 34. The method of any one of the previous embodiments, wherein the one or more adjusted polycarbonates has a weight or number average molecular weight that is 5% or more than the weight or number average molecular weight of the one or more waste polycarbonates.
Embodiment 35. The method of any one of the previous embodiments, wherein the one or more adjusted polycarbonates has a weight or number average molecular weight of 10,000 or more.
Embodiment 36. The method of any one of the previous embodiments, wherein the one or more adjusted polycarbonates has a polydispersity index of 3 or less.
Embodiment 37. The method of any one of the previous embodiments, wherein the one or more adjusted polycarbonates has an amount of carboxyl or hydroxyl containing compounds of 200 ppm or less.
Embodiment 38. The method of any one of the previous embodiments, wherein the one or more adjusted polycarbonates has a flame resistance of V-1 or V-0 at a thickness of 1.6 mm or 1.0 mm, according to UL-94 vertical test.
Embodiment 39. A composition formed from the method of any one of the previous embodiments.
Embodiment 40. A composition, comprising:
   a polycarbonate polymer comprising residues of one or more waste polycarbonates incorporated within a backbone of the polycarbonate polymer and having branching.
Embodiment 41. The composition of embodiment 40, wherein the polycarbonate has a ratio of z-average molecular weight/weight average molecular weight of about 1.8 or more.
Embodiment 42. The composition of embodiments 40 or 41, wherein the polycarbonate has an Mz+1 of 80,000 or more.
Embodiment 43. The composition of any one of embodiments 40-42, wherein the polycarbonate polymer exhibits a polymodal molecular weight distribution.
Embodiment 44. The composition of any one of embodiments 40-43, wherein the polycarbonate polymer has a z-average molecular weight of 70,000 g/mol or more.
Embodiment 45. The composition of any one of embodiments 40-44, wherein the polycarbonate polymer has a weight average molecular weight of 40,000 g/mol or more.
Embodiment 46. The composition of any one of embodiments 40-45, wherein the polycarbonate polymer has a number average molecular weight of 10,000 g/mol or more.
Embodiment 47. The composition of any one of embodiments 40-46, wherein the composition has a free hydroxyl and/or carboxyl content of the polymer of about 1000 ppm or less, based on the total weight of the composition.
Embodiment 48. The composition of any one of embodiments 40-47, wherein the polycarbonate polymer has free hydroxyl and/or carboxyl group present in an amount of 800 ppm or less, based on the total weight of the polycarbonate polymer.
Embodiment 49. The composition of any one of embodiments 40-48, wherein the composition further comprises one or more hydroxyl and/or carboxyl compound present in an amount of about 200 ppm or less, based on the total weight of the composition.
Embodiment 50. The composition of any one of embodiments 40-49, wherein the polycarbonate polymer further comprises residues of the one or more functional compounds pendant from or incorporated within the backbone.
Embodiment 51. The composition of any one of embodiments 40-50, wherein the polycarbonate polymer has a polydispersity index of 3.5 or less.
Embodiment 52. The composition of any one of embodiments 40-51, wherein the polycarbonate polymer includes the residues of waste polycarbonate in weight percent at least 10 percent, based on the total weight of the polycarbonate polymer.
Embodiment 53. The composition of any one of embodiments 40-52, wherein the polycarbonate polymer further comprises residues of virgin polycarbonate in weight percent at least 10 percent, based on the total weight of the polycarbonate polymer.
Embodiment 54. The composition of any one of embodiments 40-53, wherein the branching occurs along the backbone of the polycarbonate polymer without residues of one or more functional compounds.

### Illustrative Examples

### EXAMPLE 1:

A solution of bisphenol-A (22.5 g) and sodium hydroxide (7.5 g) is prepared in demineralized water (250 mL) in a sealed glass reactor under N2 atmosphere equipped with mechanical stirrer, condenser, and pH probe. Subsequently, the waste polycarbonate solubilized in dichloromethane is added (200 g, 12.5 wt% rePC). A sample of this waste polycarbonate is analyzed to determine molecular weight distribution and free phenolic species. The solution is stirred intensely (250 rpm) to create a suspension. The pH is 12.5 at this stage. Subsequently, 40 mL triphosgene solution (0.42 mol/L in dichloromethane) is added dropwise over a timespan of 10 minutes. Next, PTBP solution is added (0.33 g in 40 mL dichloromethane) followed by another 40 mL of the triphosgene solution over a time span of 10 minutes. Triethylamine solution (30 mL, 0.44 mol/L) is added slowly, and the reactor is stirred for 15 more minutes. As the pH is decreased to 7, a 6M NaOH solution is added until the pH reached 12.5. After waiting 10 minutes, the stirring is stopped, and the solution is phase separated in the reactor. The dichloromethane layer is transferred to a separation funnel and washed with 2M HCl (200 mL), and 3x with water. The dichloromethane layer is dried in vacuo to obtain the solid polycarbonate.

### EXAMPLE 2:

The same procedure was used as Example 1. However, in this case 200 g of dichloromethane was added at the beginning (instead of 12.5 wt% rePC solution).

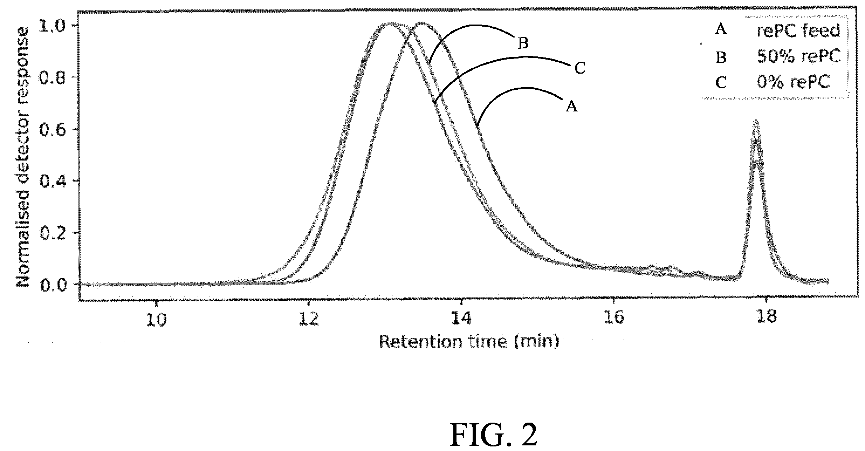

**Figure 2** illustrates size exclusion chromatography traces of A) recycled PC used as feed for the process, B) interfacial polymerization of PC where 50 wt% of the mass (compared to bisphenol-A) is coming from rePC, C) interfacial polymerization without the addition of rePC to the process. The traces were aligned using an internal standard (1,4-di-tert- butylbenzene), which elutes around 18 minutes.

**Table 1: illustrates the molecular weight distribution of the rePC feed and interfacial polymerization with 0% and 50% of rePC as determined by SEC.**

| | 100% rePC feed (Example 1) | 50% rePC (Example 1) | 0% rePC (Example 2) |
|---|---|---|---|
| Mn (Da) | 11600 | 13200 | 12000 |
| Mw (Da) | 27200 | 44900 | 40700 |
| Mz (Da) | 43600 | 83700 | 64100 |
| Mz+1 (Da) | 61400 | 141500 | 82800 |
| *Ð* | 2.34 | 3.39 | 3.38 |
| Phenolic OH (ppm) | 894 | 674 | 486 |
| Phenol (ppm) | 49.3 | 0 | |
| BPA (ppm) | 101.0 | 4.9 | |
| PTBP (ppm) | 8.0 | 8.0 | |

In Table 1, molecular weights are reported in g/mol. Phenolic OH refers to total free hydroxyl and/or carboxyl content in the composition. Phenol content refers to free phenols on the polycarbonate polymer.

The Examples show that inclusion of the waste polycarbonate achieves desirable molecular weights when reacted with or without virgin monomers, like BPA. Since waste polycarbonate includes hydroxyl and/or carboxyl groups at the ends and pendant along the backbone of the polycarbonate, desirable branching and molecular weights are achieved, relative to virgin polycarbonate.

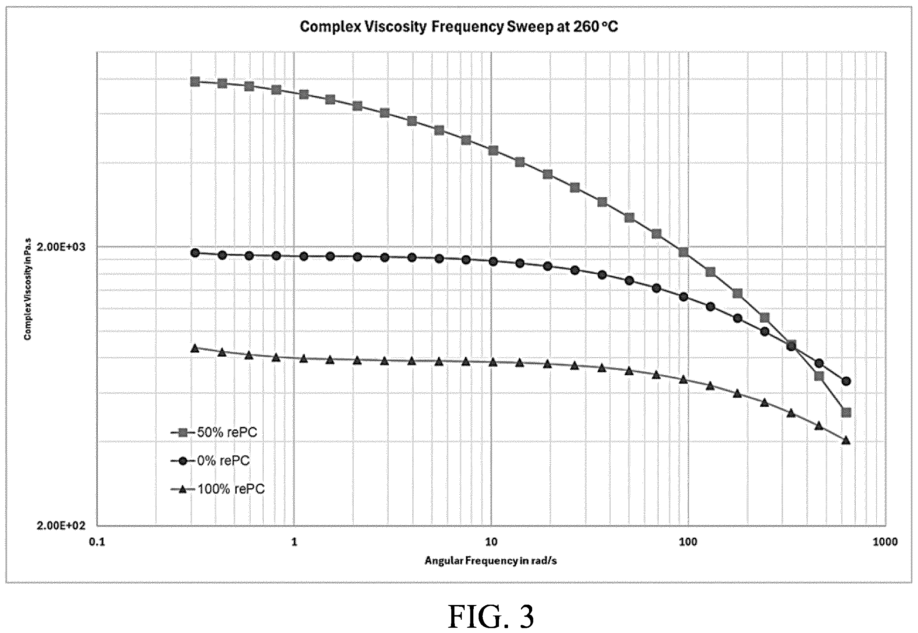

Further, **figure 3** illustrates melt viscosity vs shear rate for 100% rePC, virgin PC (0% rePC) and the hybrid polycarbonate that comprise both recycled and virgin chains (50% rePC). Increase in molecular weight in linear and virgin PC results in a shift of melt viscosity for all shear rates tested.

The complex viscosity of **figure 3** were measured at 260°C using an Anton Paar MCR 302 rheometer with air circulated oven using a PP25 measuring cell at a measuring gap of 1.000 mm. Sample are dried at 80°C for two hours prior to measuring. The measurement procedure is follows. The oven is set at 260 °C and the cell is set at "zero gap" and then set to 20 mm. The sample is added and the gap is changed to the measurement gap stopping at a gap of 1.025 mm to allow for trimming of excessive sample material. Upon reaching the measurement gap of 1.000 mm, the test commences with a sweep being performed for 10 minutes at an oscillation of 10 rad/s. Then, the test was performed by sweeping from 628 rad/s down to 0.3 rad/s recording 25 measuring points with a log distribution.

Hybrid chains (like in 50% rePC), however, reveal significantly enhanced shear thinning which indicates branching in addition to the chain extension. This melt behavior, as shown in the example including rePC and virgin chains correlates to a higher melt strength combined with a retained processability.

## Claims

1. A method, comprising:
contacting an aqueous solution comprising one or more alkali hydroxides and water, one or more chloro carbonyl compounds or a precursor thereof, and a recovery solution comprising one or more waste polycarbonates and one or more polycarbonate solvents configured to dissolve the one or more waste polycarbonates and/or the one or more chloro carbonyl compounds to form one or more adjusted polycarbonates.

2. The method of claim 1, wherein the one or more adjusted polycarbonates include branching along the backbone from residues of the free hydroxyl and/or carboxyl groups along the backbone of the waste polycarbonate.

3. The method of claims 1 or 2, wherein the one or more adjusted polycarbonates exhibits a polymodal molecular weight distribution.

4. The method of any one of the previous claims, wherein the adjusted polycarbonate has a z-average molecular weight of about 40,000 g/mol or more.

5. The method of any one of the previous claims, wherein the aqueous solution further comprises one or more hydroxyl or carboxyl containing compounds that are not recycled.

6. The method of any one of the previous claims, wherein the waste polycarbonate includes one or more hydroxyl and/or carboxyl compounds, one or more polycarbonate polymers or oligomers having free carboxyl and/or hydroxyl groups, or any combination thereof.

7. The method of any one of the previous claims, further comprising:
contacting the one or more polycarbonate solvents and a waste feed comprising the one or more waste polycarbonates in a solid state to form the recovery solution.

8. A composition, comprising:
a polycarbonate polymer comprising residues of one or more waste polycarbonates incorporated within a backbone of the polycarbonate polymer and having branching.

9. The composition of claim 8, wherein the polycarbonate has a ratio of z-average molecular weight/weight average molecular weight of about 1.8 or more.

10. The composition of claims 8 or 9, wherein the polycarbonate has an M_{z+1} of 80,000 or more.

11. The composition of any one of claims 8 to 10, wherein the polycarbonate polymer exhibits a polymodal molecular weight distribution.

12. The composition of any one of claims 8 to 11, wherein the polycarbonate polymer has a z-average molecular weight of 70,000 g/mol or more, and wherein the polycarbonate polymer has a weight average molecular weight of 40,000 g/mol or more.

13. The composition of any one of claims 8 to 12, wherein the composition has a free hydroxyl and/or carboxyl content of the polymer of about 1000 ppm or less, based on the total weight of the composition.

14. The composition of any one of claims 8 to 13, wherein the polycarbonate polymer has a polydispersity index of 3.5 or less.

15. The composition of any one of claims 8 to 14, wherein the polycarbonate polymer includes the residues of the one or more waste polycarbonates in weight percent at least 10 percent, based on the total weight of the polycarbonate polymer, or wherein the polycarbonate polymer further comprises residues of one or more virgin polycarbonate polymers or oligomers in weight percent at least 10 percent, based on the total weight of the polycarbonate polymer.
